(19) Europäisches Patentamt European Patent Office Office européen des brevets

(11) **EP 2 734 748 B1**

(12) **FASCICULE DE BREVET EUROPEEN**

(45) Date de publication et mention de la délivrance du brevet:
**28.09.2016 Bulletin 2016/39**

(21) Numéro de dépôt: **12750436.3**

(22) Date de dépôt: **20.07.2012**

(51) Int Cl.:
*F16H 9/24* *(2006.01)*      *F16H 55/54* *(2006.01)*

(86) Numéro de dépôt international:
**PCT/FR2012/051729**

(87) Numéro de publication internationale:
**WO 2013/014378 (31.01.2013 Gazette 2013/05)**

(54) **MÉCANISME ET PROCÉDÉ DE TRANSMISSION DE PUISSANCE DE ROTATION**

DREHKRAFTÜBERTRAGUNGSMECHANISMUS UND DREHKRAFTÜBERTRAGUNGSVERFAHREN

MECHANISM AND METHOD FOR TRANSMITTING POWER OF ROTATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.07.2011 FR 1156699**

(43) Date de publication de la demande:
**28.05.2014 Bulletin 2014/22**

(73) Titulaires:
• **Clopet, Cyril**
  **25480 Pirey (FR)**
• **Azzopardi, Pierre**
  **25000 Besancon (FR)**
• **Revol, Vincent**
  **70190 Cromary (FR)**

(72) Inventeurs:
• **Clopet, Cyril**
  **25480 Pirey (FR)**
• **Azzopardi, Pierre**
  **25000 Besancon (FR)**
• **Revol, Vincent**
  **70190 Cromary (FR)**

(74) Mandataire: **Cabinet Plasseraud**
  **66, rue de la Chaussée d'Antin**
  **75440 Paris Cedex 09 (FR)**

(56) Documents cités:
**EP-A1- 1 811 205     GB-A- 551 690**
**GB-A- 575 725     US-A- 2 328 544**

## Description

### DOMAINE DE L'INVENTION :

L'invention concerne le domaine des mécanismes de transmission de puissance mécanique entre deux éléments rotatifs. L'invention concerne notamment les mécanismes à rapport de vitesse de rotation pouvant varier continument. De telles transmissions sont appelées CVT (Continuous Variable Transmission).

### ETAT DE LA TECHNIQUE :

La demande GB 436 053 a décrit en 1935 un mécanisme de changement de vitesse qui utilise une chaîne reliant deux arbres. Sur chaque arbre est montée une roue équipée de secteurs montés chacun sur un ressort pour pincer la chaîne. Lorsque les maillons de la chaîne ont fait le tour d'une roue et s'apprêtent à rejoindre l'autre roue, la libération des maillons nécessite de desserrer le pincement en comprimant successivement les ressorts des secteurs. Dans ce mécanisme, la trajectoire circulaire de la chaîne est maintenue uniquement par le pincement des flancs de la chaîne. Ainsi, l'effort de pincement doit être très élevé pour éviter tout glissement de la chaîne sur la roue. Cela limite le couple susceptible d'être transmis. Par ailleurs, l'énergie consommée pour comprimer les ressorts et faire cesser le pincement dégrade fortement le rendement énergétique de la transmission.

La demande GB 356 196 décrit également un mécanisme de transmission de puissance à vitesse variable.

La demande US 4 078 442, publiée en 1978, montre une commande à vitesse variable. Une chaîne est équipée, à chaque extrémité de ces axes d'articulation, de patins de traction qui s'appuient sur des surfaces coniques de deux roues en regard. Lorsque l'on tend la chaîne entre deux ensembles de deux roues coniques en regard, l'effort d'appui des patins sur les surfaces coniques permet de transmettre un couple. Cependant, une telle transmission présente l'inconvénient que l'adhérence de la chaine sur les surfaces conique nécessite que la chaine soit tendue, non seulement dans son brin « tendu » mais également dans son brin « mou ». La chaine doit être l'objet d'une tension de base non utilisée pour transmettre un couple et engendrant des frottements parasites multiples. Par exemple, l'énergie dissipée, lorsqu'un maillon passe d'une partie rectiligne de sa trajectoire à une partie enroulée, par frottement dans l'axe du maillon lui-même, est augmentée du fait de cette tension de base. Le rendement énergétique est très médiocre.

En 2008, la demande WO 2008/012591 a proposé une transmission utilisant une chaîne de longueur figée mais comprenant des organes d'engrainement montés sur support élastique et engrenant avec des rainures radiales. Cela permet d'adapter le pas entre deux organes d'engrainement successifs. Cette transmission présente également un rendement médiocre car la compression et le relâchement des supports élastiques de chaque maillon consomment de l'énergie.

Par ailleurs, US2 328 544 qui décrit la préambule de la revendication 1 et de la revendication 21, GB 575 725, GB 551 690 et EP 1 811 205 décrivent également des Transmissions Continument Variables.

### OBJET ET RESUME DE L'INVENTION :

L'invention propose un mécanisme et un procédé de transmission de puissance de rotation qui remédient à au moins l'un des problèmes précités.

Un but de l'invention est de proposer une transmission de puissance de rotation ayant un rendement énergétique amélioré et qui soit compatible avec une variation continue du rapport de transmission.

Un mode de réalisation selon un premier aspect de l'invention est un mécanisme de transmission de puissance de rotation comprenant :

- un lien s'étendant le long d'une boucle fermée et constitué d'une succession de portions présentant chacune une direction longitudinale tangente à la boucle fermée,
- un premier et un deuxième éléments rotatifs, mobiles respectivement en rotation autour d'un premier et d'un deuxième axe,
- des moyens de guidage du lien conçus pour guider le lien le long d'un premier cercle d'entraînement coaxial au premier axe, et le long d'un deuxième cercle d'entraînement coaxial au deuxième axe, la boucle fermée comprenant une portion active de chacun des cercles d'entraînement, et
- des moyens de solidarisation temporaire de chaque portion de lien à successivement chacun des éléments rotatifs lorsque la portion de lien passe dans la portion active correspondante.

Les moyens de solidarisation temporaire comprennent une pluralité de moyens autobloquants répartis au moins le long de la portion active du premier cercle d'entraînement, les moyens autobloquants comprenant au moins un élément de coincement rigide en appui simultanément d'une part sur une première surface d'appui appartenant au premier élément rotatif, et d'autre part sur une deuxième surface d'appui appartenant à une portion de lien en regard de l'élément de coincement.

Les premières et deuxièmes surfaces d'appui sont agencées de manière qu'au moins un élément de coincement de la portion active du premier cercle d'entraînement soit arc-bouté entre la première et la deuxième surface d'appui et soit apte à s'auto débloquer lorsque le moyen autobloquant correspondant quitte la portion active.

Au moins l'une des première ou deuxième surface d'appui est une surface d'agrippement tangentiel qui est parallèle à la direction longitudinale de la portion de lien contre laquelle l'élément de coincement est en appui.

On entend par « élément de coincement rigide », soit un corps rigide, soit un sous ensemble de plusieurs corps rigides pouvant être mobiles l'un par rapport à l'autre dans une certaine configuration, mais où le sous ensemble présente une configuration dans laquelle ces corps sont en équilibre statique l'un par rapport à l'autre et forment un sous ensemble rigide pouvant se coincer.

Le fait que l'une des surfaces d'appui soit parallèle à la direction longitudinale de la portion de lien fait que la transmission de la puissance mécanique utilise la composante de frottement de l'appui sur cette surface. Il n'y a pas d'entraînement par obstacle comme dans les pignons de vélo. Cela permet à l'agrippement tangentiel d'avoir lieu sur une infinité de positions possibles, par exemple sur toute la longueur du lien, et non pas à certains endroits discrets. Cela permet à l'élément de coincement de solidariser la portion de lien et l'élément rotatif correspondant quelque soit le diamètre du cercle d'entraînement. Par ailleurs, le fait que cette solidarisation se fasse par arc-boutement d'un élément de coincement fait que l'effort d'appui sur les premières et deuxièmes surfaces d'appui est proportionnel au couple transmis de manière à maintenir l'immobilisation. De plus, l'élément de coincement constitue un intermédiaire mécanique entre l'élément rotatif et le lien. La solidarisation par arc-boutement suppose certaines conditions de frottement et de vitesses relatives. Lorsque ces conditions disparaissent, il y a auto-déblocage. Il n'y a pas d'énergie à fournir pour permettre au lien de quitter l'élément rotatif. Ainsi, la combinaison d'une solidarisation par arc-boutement et d'un appui sur une surface parallèle à la portion de lien permet à la fois un rapport de transmission continument variable, la transmission de couples élevés, et un bon rendement énergétique.

On distingue l'immobilisation relative de deux pièces par arc-boutement d'un élément de coincement, d'une simple immobilisation desdites deux pièces par interposition d'un élément intermédiaire entre les pièces tel qu'une clavette ou un pêne, par le fait que la persistance de la cause du mouvement relatif entre les deux pièces coincées par arc-boutement engendre des déformations qui augmentent le blocage. Il peut y avoir arc-boutement avec frottement de l'élément de coincement sur les deux pièces à solidariser, comme dans le cas de mécanisme de roue libre, ou bien avec frottement de l'élément de coincement avec l'une des deux pièces seulement.

Dans le cas d'un arc-boutement d'un élément de coincement entre la première et la deuxième surface d'appui précitée, on peut caractériser l'arc-boutement en considérant les centres des surfaces de contact de l'élément de coincement avec respectivement la première et la deuxième surface d'appui. On appelle ligne d'action, la ligne passant par ces deux centres. L'arc-boutement se caractérise alors par le fait que la ligne d'action présente un angle au moins par rapport à la normale à celle des surfaces d'appui qui est la surface d'agrippement tangentiel, laquelle normale est prise à l'endroit du centre correspondant et par le fait que la tangente dudit angle est inférieure au coefficient de frottement statique de l'élément de coincement avec la surface d'agrippement tangentiel.

Dans l'art antérieur US 4 078 442 précité, les patins de tractions sont simplement comprimés entre la roue conique et le reste de la chaîne. Le couple transmis est la cause du mouvement relatif potentiel entre la roue et le reste de la chaine. L'effort de compression axial des patins n'est pas augmenté par la persistance du couple transmis. Il n'y a pas d'arc-boutement du patin de traction entre la roue conique et la chaîne. De même, dans l'art antérieur GB 436053, l'effort de pincement de la chaine exercé par les secteurs est indépendant du couple transmis. Il n'y a pas arc-boutement de ces secteurs. Dans l'art antérieur WO2008/012591, les organes d'engrènement sont simplement en prise directe avec les rainures radiales, ils ne sont pas arc-boutés sur ces rainures.

Avantageusement, le mécanisme est à rapport de transmission continument variable, les moyens de guidage du lien étant conçus de manière à pouvoir faire varier le diamètre d'au moins le premier cercle d'entraînement.

Selon un mode de réalisation, les éléments de coincement sont aptes à rouler sur la première et/ou sur la deuxième surface d'appui correspondant. Grâce à l'aptitude de cet intermédiaire mécanique à rouler sur au moins l'une de ces surfaces d'appui, il est possible, avec un effort réduit, de déplacer ces deux surfaces d'appui l'une par rapport à l'autre alors que l'élément de coincement est encore arc-bouté entre elles et que l'effort d'appui est élevé. Il n'y a pas d'effort de frottement statique à vaincre mais uniquement un frottement de roulement très réduit. Cela permet de faire cesser les conditions du blocage sans apport significatif d'énergie. Le fait d'utiliser un moyen de solidarisation du mouvement du lien avec au moins l'un des éléments rotatifs par coincement d'un élément apte à rouler, procure l'effet surprenant, d'une part de permettre un effort de solidarisation très élevé ouvrant la voie à une transmission de forte puissance, et d'autre part, de faciliter la désolidarisation entre le lien et l'élément rotatif. Cela améliore grandement le rendement énergétique de la transmission.

Avantageusement, les éléments de coincement du mécanisme sont pris parmi un groupe comprenant : des billes, des rouleaux, des tonneaux, des sous-ensembles équipés d'une semelle d'appui frottant sur la surface d'agrippement tangentiel et comprennent un élément à coefficient de frottement réduit sur l'autre surface d'appui (éléments roulants, matériau de glissement, film d'huile, ...etc) ; des cames articulées à une extrémité et ayant une surface d'appui bombée et frottant à l'autre extrémité, des cames allongées présentant deux extrémités d'appui bombées et frottantes.

De manière avantageuse, les éléments de coincements peuvent être des galets agencés pour coopérer avec le support et avec le lien par frottement et roulement.

Dans un mode de réalisation, la pluralité de moyens autobloquants est répartie le long du premier cercle d'entraînement ou le long des deux cercles d'entraînement.

Avantageusement, le lien présente un premier plan d'agrippement sensiblement perpendiculaire au premier et au deuxième axe, dans lequel chaque portion de lien comprend au moins un élément rigide, chacun des éléments rigides comprenant une première surface d'agrippement s'étendant dans le premier plan d'agrippement. Ainsi, la principale composante de l'effort exercé pour agripper le lien est parallèle à l'axe.

Avantageusement, le lien présente un deuxième plan d'agrippement, parallèle au premier plan d'agrippement, chaque élément rigide comprenant une deuxième surface d'agrippement s'étendant dans le deuxième plan d'agrippement. La rigidité des éléments rigides permet de résister à un effort de pincement sur les deux surfaces d'agrippement opposées. Les composantes axiales des efforts de pincement sur lesdites surfaces s'annulent mutuellement. Seule se cumule la composante tangentielle de l'effort qui peut alors être suffisamment élevée pour transmettre des couples élevés.

Avantageusement, les surfaces d'agrippement qui sont coplanaires et appartiennent à deux portions successives du lien, sont sensiblement adjacentes de manière que les éléments de coincement du mécanisme sont aptes à s'appuyer simultanément sur lesdites surfaces d'agrippement adjacentes.

Avantageusement, le lien est une chaîne constituée par des maillons articulés les uns aux autres.

Avantageusement, les maillons présentent chacun une semelle ayant au moins une surface d'agrippement sensiblement contenue dans le plan d'agrippement de la chaine.

Avantageusement, les semelles de deux maillons successifs peuvent présenter des formes conjuguées de manière que les surfaces d'agrippement desdits maillons successifs soient sensiblement en continuité l'une de l'autre, tout en autorisant l'articulation desdits maillons. Cela permet à l'élément ou aux éléments de coincement, de presser sur la ou les surfaces d'agrippement comme s'il s'agissait d'un plan continu perpendiculaire aux arbres. Il n'y a pas d'interstice susceptible de bloquer les éléments de coincement.

Avantageusement, le premier élément rotatif - ou chacun des deux éléments rotatifs - est équipé d'une pluralité de supports, mobiles radialement le long de l'élément rotatif correspondant, chacun des moyens autobloquants de l'élément rotatif correspondant comprenant au moins un élément de coincement rigide solidaire du support, et un moyen de rappel conçu pour ramener l'élément de coincement vers une position de coincement.

Avantageusement, chacun des éléments rotatifs équipés de supports mobiles comprend une paire de roues présentant des guides répartis sur les deux roues de manière à être en regard deux à deux dans un plan passant par le premier axe ; et dans lequel les supports, montés coulissants dans lesdits guides, comprennent une portion de liaison présentant une extrémité axiale coopérant avec un des guides d'une des roues, l'autre extrémité axiale coopérant avec le guide en regard de l'autre roue.

Avantageusement, les guides d'au moins une des roues forment un angle aigu par rapport à l'axe correspondant ; et le mécanisme comprend un dispositif d'entraînement axial d'une roue par rapport à l'autre roue de la paire de roues, de façon à faire varier le diamètre du cercle d'entraînement du lien.

Avantageusement, chacun des supports comprend ladite première surface d'appui de l'élément de coincement solidaire du support, le même élément de coincement en position de coincement appuyant sur ladite deuxième surface d'appui en une zone ayant comme centre un point, appelé point d'agrippement.

Avantageusement, la première surface d'appui est une surface de coincement sensiblement plane et présentant un angle de coincement par rapport au premier plan d'agrippement.

On entend par point d'agrippement le barycentre des efforts d'appui répartis sur la surface de Hertz entre l'élément de coincement et le plan d'agrippement.

Avantageusement, l'orientation de l'angle de coincement peut dépendre du sens de rotation des éléments rotatifs et du fait qu'il s'agisse d'un élément moteur ou récepteur de la transmission de puissance. Pour l'élément rotatif récepteur, c'est le lien qui entraîne l'élément rotatif. La surface de coincement est plus proche du lien en aval de l'élément de coincement. C'est-à-dire que lorsque la portion du lien en contact avec l'élément de coincement se déplace dans le sens du défilement du lien, l'élément de coincement est entraîné vers une partie de la surface de coincement qui est plus proche du lien. C'est-à-dire que l'élément de coincement est encore plus coincé. L'effort transmis par l'élément de coincement sur la surface de coincement atteint une intensité suffisante pour transmettre le couple à l'arbre récepteur. Pour l'élément rotatif moteur, c'est l'élément rotatif qui tire le lien et la surface de coincement est plus proche du lien en amont de l'élément de coincement.

Dans une variante, la normale à la surface de coincement présente un angle supplémentaire par rapport à un plan perpendiculaire à un rayon passant par le point d'agrippement.

Avantageusement, l'angle supplémentaire est orienté de manière que la direction imposée par le moyen de rappel arrive sensiblement parallèle à un plan défini comme étant parallèle à l'axe et au brin du lien en aval de l'élément rotatif considéré, après que la portion du lien qui était agrippée, ait commencé à entrer dans le brin aval.

Avantageusement, l'angle supplémentaire est supérieur ou idéalement égal à la moitié de l'angle à partir duquel une portion du brin aval n'est plus axialement en regard des surfaces de coincement, en particulier pour l'élément rotatif récepteur.

Dans une variante dans laquelle le premier ou le deuxième élément rotatif est un élément récepteur de la transmission de puissance, les moyens autobloquants de l'élément rotatif récepteur sont équipés d'éléments de coincement agencés de manière que le point d'agrippement soit à une distance de l'axe de l'élément récepteur supérieure à la distance séparant ledit axe d'une ligne neutre du lien le long du cercle d'entraînement correspondant.

Dans une variante dans laquelle le premier ou le deuxième élément rotatif est un élément moteur de la transmission de puissance, les moyens autobloquants de l'élément rotatif moteur sont équipés d'éléments de coincement agencés de manière que le point d'agrippement soit à une distance de l'axe de l'élément moteur inférieure à la distance séparant ledit axe d'une ligne neutre du lien le long du cercle d'entraînement correspondant.

Dans une variante, l'ensemble de la surface de Hertz relative à l'appui entre le plan d'agrippement et l'élément de coincement équipant l'arbre récepteur est au-delà de la ligne neutre du lien par rapport à l'axe. Alternativement ou en combinaison, l'ensemble de la surface de Hertz relative à l'appui entre le plan d'agrippement et l'élément de coincement équipant l'arbre moteur peut être en deçà de la ligne neutre du lien par rapport à l'axe.

Avantageusement, lesdites première et deuxième surfaces d'appui sont disposées de manière que la différence de vitesse entre lesdites surfaces d'appui lorsque la portion de lien quitte le cercle d'entraînement entraine le déblocage de l'élément de coincement.

Avantageusement, la surface d'agrippement tangentiel est perpendiculaire au premier axe ou présente par rapport au plan perpendiculaire au premier axe un angle inférieur à l'angle de frottement entre l'élément de coincement et la surface d'agrippement.

Avantageusement, le lien est déformable et inextensible. L'inextensibilité du lien peut être telle que la transmission du couple ne provoque pas d'allongement significatif de la boucle fermée.

Selon un autre mode de réalisation du mécanisme de transmission de puissance, la pluralité de moyens autobloquants est répartie le long du lien, la surface d'agrippement tangentiel étant la surface d'appui du premier élément rotatif. Chacun des moyens autobloquants comprend au moins un élément de coincement rigide solidaire d'une portion de lien, et un moyen de rappel conçu pour ramener l'élément de coincement vers une position de coincement. Avantageusement, ladite surface d'agrippement tangentiel s'étend de manière sensiblement continue autour du premier axe et sur toute la zone radiale correspondant à la variation de diamètre du cercle d'entraînement.

Selon un autre mode de réalisation, l'un quelconque des mécanismes précités comprend une pluralité de supports solidaires en rotation du premier élément rotatif et disposés le long du premier cercle d'entraînement.

Chaque moyen autobloquant présente un plan tangent défini comme parallèle au premier axe et tangent à la boucle fermée à l'endroit du moyen autobloquant, et comprend au moins un élément de liaison constitué d'un solide de liaison ou de plusieurs solides de liaison en appui deux à deux par une surface d'appui mutuel.

Lorsque le moyen autobloquant est dans une configuration de coincement, l'élément de liaison est en appui sur l'un des supports par une surface d'appui mutuel et sur une portion du lien par une autre surface d'appui mutuel.

Au moins l'une des surfaces d'appui mutuel est une surface de débrayage dont une normale présente par rapport au plan tangent un angle supérieur à un angle de débrayage.

Chaque élément de liaison comprend ledit élément de coincement constitué de tous ou d'une partie des solides de liaison, l'élément de coincement étant, en configuration de coincement, arc-bouté entre deux surfaces d'appui mutuel de coincement situées de part et d'autre de l'élément de coincement.

Selon un deuxième aspect, l'invention porte sur un mécanisme de transmission de puissance de rotation comprenant :

- un lien s'étendant le long d'une boucle fermée,
- un premier et un deuxième élément rotatif, mobiles respectivement en rotation autour d'un premier et d'un deuxième axe,
- des moyens de guidage du lien conçus pour guider le lien le long d'un premier cercle d'entraînement coaxial au premier axe et d'un deuxième cercle d'entraînement coaxial au deuxième axe, la boucle fermée comprenant une portion active de chacun des cercles d'entraînement,
- une pluralité de supports solidaires en rotation du premier élément rotatif et disposés le long du premier cercle d'entraînement, et
- une pluralité de moyens autobloquants répartis au moins le long de la portion active du premier cercle d'entraînement et présentant chacun un plan tangent défini comme parallèle au premier axe et tangent à la boucle fermée à l'endroit du moyen autobloquant,

dans lequel chaque moyen autobloquant comprend au moins un élément de liaison constitué d'un solide de liaison ou de plusieurs solides de liaison en appui deux à deux par une surface d'appui mutuel,

dans lequel, lorsque le moyen autobloquant est dans une configuration de coincement, l'élément de liaison est en appui sur l'un des supports par une surface d'appui mutuel et sur une portion du lien par une autre surface d'appui mutuel,

dans lequel au moins l'une des surfaces d'appui mutuel est une surface de débrayage dont une normale présente par rapport au plan tangent un angle supérieur à un angle de débrayage,

et dans lequel chaque élément de liaison comprend un élément de coincement constitué de tous ou d'une partie des solides de liaison, l'élément de coincement étant, en configuration de coincement, arc-bouté entre deux surfaces d'appui mutuel de coincement situées de part et d'autre de l'élément de coincement.

On comprend que, dans la configuration de coincement du mécanisme de transmission selon ce deuxième aspect, l'élément de liaison exerce un effort entre la portion de lien et le support et que l'intensité de cet effort est principalement due à l'élément de coincement arc-bouté. Comme dans les modes de réalisation selon le premier aspect de l'invention, cet effort augmente avec le couple transmis et n'impose pas que le brin mou de la transmission soit tendu. Cependant, selon ce deuxième aspect, cet effort de liaison est transmis, en configuration de coincement, à travers l'appui mutuel sur la surface de débrayage. Grâce à l'angle que la normale de cette surface de débrayage présente par rapport au plan tangent, cette transmission d'effort cesse dès que la composante radiale de l'effort de liaison devient insuffisante pour assurer l'adhérence par frottement statique sur la surface de débrayage. Cela permet aux moyens autobloquants de s'auto-débloquer.

Selon l'un ou l'autre des aspects précités, un mode de réalisation du mécanisme est tel que les surfaces d'appui mutuel définissant ensemble une direction de référence qui est la direction d'un effort qui serait transmis au support si la portion de lien exerçait sur l'élément de liaison un effort dépourvu de composante radiale. L'angle de débrayage est définit comme étant le plus petit angle d'inclinaison de la normale à la surface de débrayage par rapport au plan tangent, angle d'inclinaison pour lequel la direction de référence est hors du cône de frottement sur la surface de débrayage.

Selon l'un ou l'autre des aspects précités, un mode de réalisation du mécanisme est tel que l'angle de débrayage est définit comme ayant une tangente égale au coefficient de frottement sur la surface de débrayage.

Selon l'un ou l'autre des aspects précités, un mode de réalisation du mécanisme est tel que le support présente une forme globale en U recevant la portion de lien correspondante en arrivant dans la portion active, et dans lequel la portion de lien est pincée entre un effort exercé par l'élément de liaison du moyen autobloquant entre une branche du U et la portion de lien et une contre réaction ayant une composante axiale opposée exercée entre l'autre branche du U et la même portion de lien.

Selon l'un ou l'autre des aspects précités, un mode de réalisation du mécanisme est tel que la portion de lien comprend une surface d'actionnement par laquelle la portion de lien exerce, lorsque celle-ci s'approche du support correspondant, un effort d'actionnement présentant une composante radiale, lequel effort d'actionnement est alors transmis au support via l'élément de liaison. L'angle de la surface de débrayage est inférieur à un angle maximum prédéterminé pour que l'apparition de l'effort d'actionnement donne à l'effort exercé par l'élément de liaison entre le support et la portion de lien une direction incluse dans le cône de frottement de la surface de débrayage.

Avantageusement, le moyen autobloquant comprend un ressort de rappel d'arc-boutement agencé pour ramener parallèlement ou de manière sensiblement parallèle au plan tangent l'élément de coincement dans une position nominale.

Avantageusement, le moyen autobloquant comprend une butée qui est mobile entre une position de repos définissant la position nominale de l'élément de coincement et une position de recul. Le moyen autobloquant comprend en outre un ressort précontraint agencé pour maintenir la butée en position de repos pendant que le ressort de rappel d'arc-boutement pousse l'élément de coincement dans une configuration débrayé contre la butée. La position de recul permettant un déplacement de l'élément de coincement en configuration de coincement au-delà de la position nominale.

Selon l'un ou l'autre des aspects précités, un mode de réalisation du mécanisme est tel que au moins celle des surfaces d'appui mutuel de coincement qui n'est pas une surface de débrayage présente une normale parallèle au plan tangent.

Avantageusement, l'élément de liaison est solidaire du support.

Selon l'un ou l'autre des aspects précités, un mode de réalisation du mécanisme est tel que la surface d'appui mutuel de coincement dont la normale est parallèle au plan tangent appartient au support et dans lequel l'élément de liaison est confondu avec l'élément de coincement et comprend un coin d'agrippement coopérant avec un plan d'agrippement du lien qui est aussi la surface de débrayage.

Selon l'un ou l'autre des aspects précités, un mode de réalisation du mécanisme est tel que l'élément de liaison est confondu avec l'élément de coincement et comprend un chariot longitudinal mobile parallèlement au plan tangent ; l'élément de liaison et de coincement comprend en outre un coin d'agrippement, embarqué sur le chariot longitudinal et coulissant radialement sur le chariot longitudinal le long de la surface de débrayage.

Avantageusement, l'élément de liaison et de coincement comprend en outre une série de rouleaux parallèles intercalés entre une surface de glissement du chariot longitudinal et la surface d'appui mutuel de coincement appartenant au support.

Selon l'un ou l'autre des aspects précités, un mode de réalisation du mécanisme est tel que l'élément de liaison comprend un chariot radial qui coulisse radialement sur le support le long de la surface de débrayage. L'élément de coincement est embarqué sur le chariot radial et le chariot radial comprend la surface d'appui mutuel de coincement.

Avantageusement, l'élément de coincement comprend un coin d'agrippement coopérant avec un plan d'agrippement du lien et une série de rouleaux parallèles intercalés entre la surface d'appui mutuel de coincement appartenant au chariot radial et une surface de glissement du coin d'agrippement.

Avantageusement, le moyen autobloquant comprend un ressort de débrayage agencé pour déplacer radialement un solide de liaison en appui le long de la surface de débrayage.

Selon encore un autre aspect, l'invention porte sur un procédé de transmission de puissance de rotation entre deux éléments rotatifs utilisant un lien en boucle fermée. Le procédé comprenant les étapes :

- de liaison dans laquelle on fait circuler chaque portion de lien d'un élément rotatif à l'autre,
- d'auto-blocage des portions de lien lorsque celles-ci sont autour d'un des éléments rotatifs, et
- d'auto-déblocage des portions de lien lorsque celles-ci circulent d'un élément rotatif à l'autre.

L'auto-blocage se fait par arc-boutement d'un élément de coincement entre l'élément rotatif et ladite portion, la transmission de la puissance mécanique se faisant par un frottement sur une surface parallèle à la tangente à la portion correspondante de la boucle fermée.

Selon un autre mode de réalisation, le procédé de transmission de puissance de rotation entre deux éléments rotatifs, utilise un lien en boucle fermée entourant les deux éléments rotatifs. Le procédé comprend pour chaque portion de lien, une étape d'agrippement au cours de laquelle, lorsque ladite portion est située autour d'un des éléments rotatifs, on solidarise ladite portion de lien à l'élément rotatif correspondant. L'agrippement se fait par roulement d'un élément de coincement jusqu'à une position de coincement entre ladite portion et un support solidaire en rotation dudit élément rotatif. Pour chaque portion de lien, le procédé comprend une étape d'auto-déblocage par roulement inverse de l'élément de coincement autorisant ladite portion à quitter l'un des éléments rotatifs et aller vers l'autre.

Le mécanisme de transmission peut comprendre plus que deux éléments rotatifs. Au moins l'un des éléments rotatifs est moteur et au moins l'un des éléments rotatifs est récepteur. La portion du lien qui, dans le sens de défilement du lien, relie le dernier élément récepteur au premier élément moteur est appelée « brin tendu ». La portion du lien qui relie le dernier élément moteur au premier élément récepteur est appelée « brin mou ».

BREVE DESCRIPTION DES DESSINS :

La présente invention sera mieux comprise à l'étude de la description détaillée de quelques modes de réalisation pris à titre d'exemples nullement limitatifs et illustrés par les dessins annexés sur lesquels :

- la figure 1 est une vue de côté d'un mode de réalisation du mécanisme de transmission dans son ensemble,
- la figure 2 est une vue en perspective d'une paire de roue motrice,
- les figures 3a, 3b, 3c et 3d sont respectivement une vue en coupe longitudinale, une vue de côté, une vue en coupe transversale et une vue de détail d'un mode de réalisation du lien,
- la figure 4 est une vue de dessus de l'arbre moteur selon la flèche IV de la figure 1,
- les figures 5, 6 et 7 sont respectivement une coupe transversale, une vue de côté et une vue de dessus d'un moyen autobloquant d'un arbre récepteur selon respectivement les flèches V, VI, VII indiquées aux figures 1, 5, 6, 7,
- la figure 8a est un schéma illustrant les vitesses du support et du lien autour de l'arbre récepteur,
- les figures 8b et 8c illustrent respectivement le blocage automatique du « brin mou » et le déblocage automatique du « brin tendu » autour de l'arbre récepteur,
- les figures 9, 10, 11 et 12 sont respectivement une vue en perspective, une vue en coupe transversale, une vue de côté et une vue de dessus d'un moyen autobloquant d'un arbre moteur selon les flèches X, XI et XII indiquées aux figures 1, 8, 9 et 10,
- la figure 13a est un schéma illustrant les vitesses du support et du lien autour de l'arbre moteur,
- les figures 13b et 13c illustrent respectivement le déblocage automatique du « brin mou » et le blocage automatique du « brin tendu » autour de l'arbre moteur,
- les figures 14a et 14b illustrent respectivement une coupe longitudinale et une vue de côté d'une variante du lien,
- les figures 15a, 15b, 15c et 15d illustrent des variantes de moyens autobloquants,
- la figure 16 est une vue en bout d'un premier mode de réalisation de moyens autobloquants pour une deuxième famille de modes de réalisation de l'invention,
- la figure 17 est une vue de dessus selon la flèche XVII de la figure 16,
- la figure 18 illustre la répartition des efforts exercés par le lien sur les éléments rotatifs,
- la figure 19 illustre la direction des efforts exercés par une portion de lien sur l'élément de liaison lorsque le moyen autobloquant des figures 16, 17 est en configuration de coincement (trait fort plein) ou en configuration de débrayage (trait fort pointillé),
- la figure 20 est une vue en bout d'un deuxième mode de réalisation de moyens autobloquants pour la deuxième famille de modes de réalisation de l'invention,

- les figures 21 et 22 sont respectivement une vue de dessus selon la flèche XXI de la figure 20, et une vue en coupe selon le plan XXII-XXII de la figure 20,
- la figure 23 est une vue en bout d'un troisième mode de réalisation de moyens autobloquants pour ladite deuxième famille, et
- la figure 24 est une vue de dessus selon la flèche XXIV de la figure 23.

DESCRIPTION DETAILLEE :

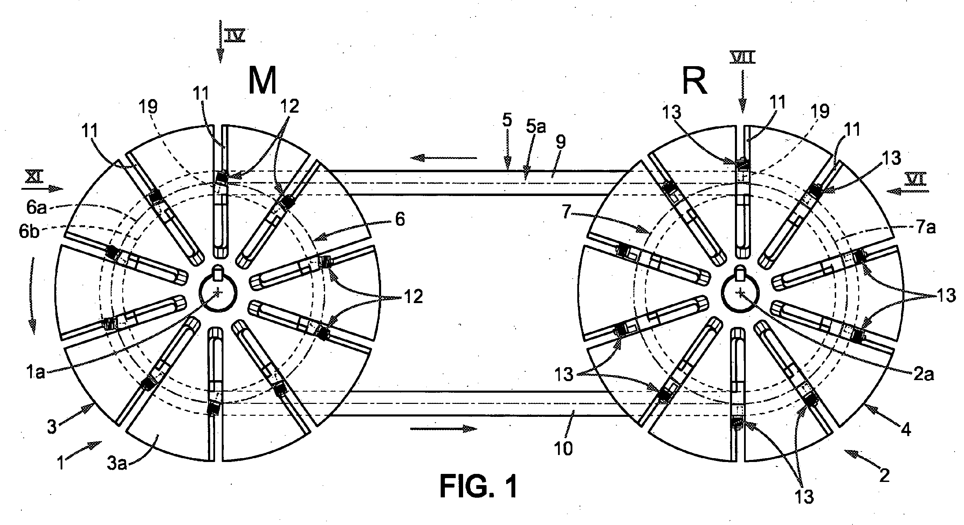

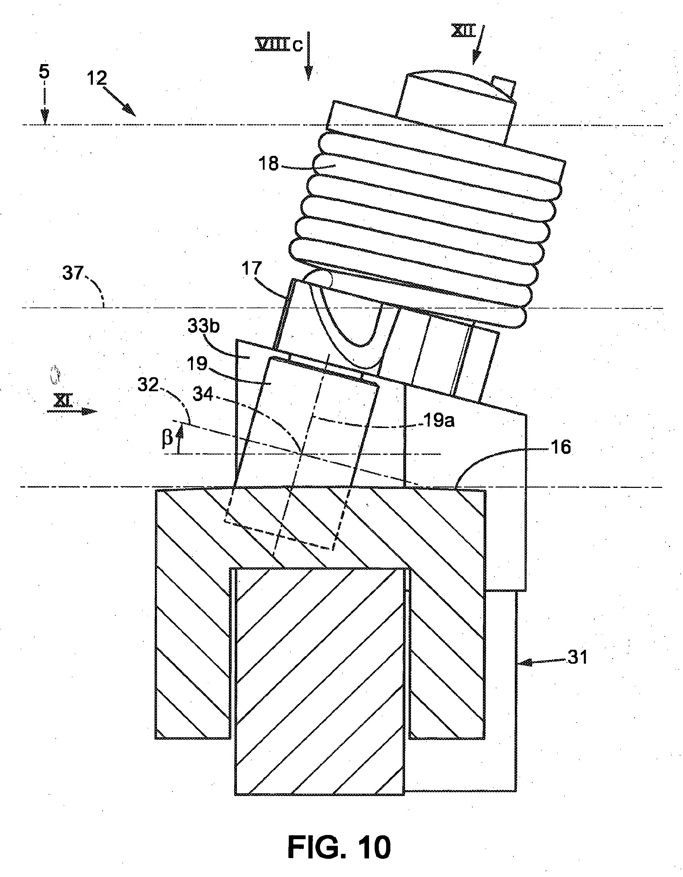

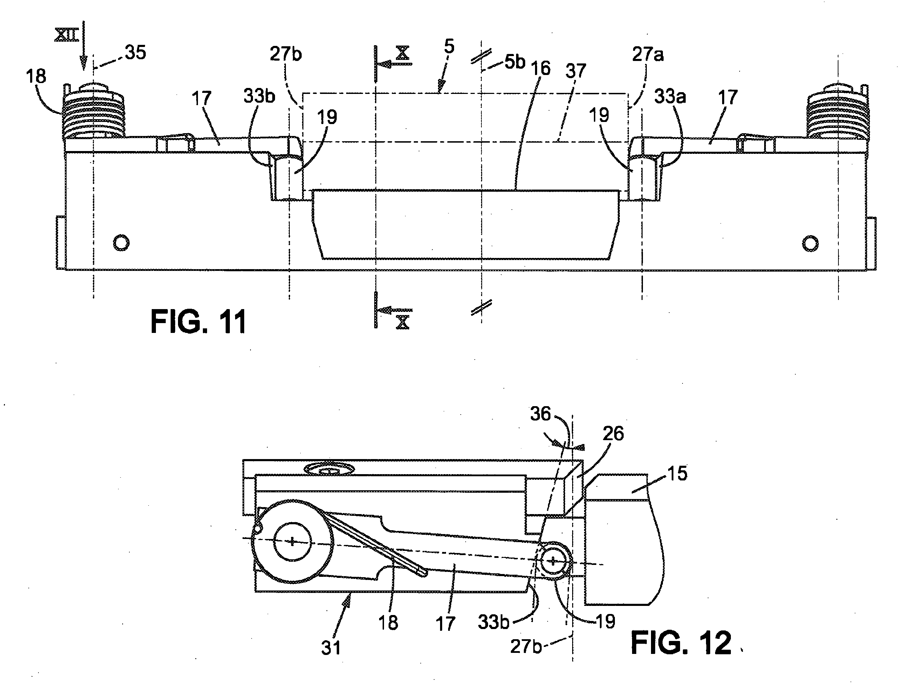

On va décrire à l'aide des figures 1 à 13 une première famille de modes de réalisation dans lesquels l'aptitude des moyens autobloquants à s'auto-débloquer lorsque ledit moyen quitte la portion active du cercle d'entraînement, exploite le fait que, lorsqu'une portion de lien passe d'une partie circulaire à une partie sensiblement rectiligne de sa trajectoire, celle-ci se redresse. Ce redressement s'accompagne notamment d'un mouvement relatif de ladite portion de lien par rapport à la portion immédiatement en amont. Ce petit mouvement relatif est mis à profit pour décoincer l'élément de coincement.

Comme illustré en figure 1, la transmission comprend un premier élément rotatif moteur 1 et un deuxième élément rotatif récepteur 2, mobiles en rotation autour d'un premier axe moteur 1a et d'un deuxième axe récepteur 2a respectivement. L'élément rotatif moteur 1 comprend une paire de roues motrices 3 et l'élément rotatif récepteur 2 comprend une paire de roues réceptrices 4. La transmission comprend également un lien 5 entourant les roues motrices 3 et réceptrices 4.

La paire de roues motrices 3 présente un cercle d'entraînement 6 du lien 5 et la paire de roues réceptrices 4 présente également un cercle d'entraînement 7 du même lien 5. Le lien 5 présente deux portions sensiblement circulaires s'entourant le long d'une portion active 6a du cercle d'entraînement 6 et le long d'une portion active 7a du cercle d'entraînement 7. Le lien 5 présente également un « brin tendu » 9 s'étendant, dans le sens de défilement du lien 5 en amont des roues motrices 3 ainsi qu'un « brin mou » 10 s'étendant en aval des roues motrices 3. Dans toute la demande, on appelle « côté amont » d'un point de la trajectoire le long de laquelle s'écoule le lien 5, la zone de la trajectoire qui vient d'être en regard d'un point du lien avant que ce même point du lien n'arrive en regard dudit point de la trajectoire. Le côté aval est la zone de la trajectoire qui va être en regard d'un point du lien immédiatement après. L'ensemble des deux brins 9, 10 sensiblement rectilignes et les deux portions actives 6a, 7a des cercles d'entraînement constituent ensemble une boucle fermée 5a, le long de laquelle s'étend le lien 5.

Chacune des roues motrices 3 et réceptrices 4 comprend une pluralité de rainures 11 qui s'étendent radialement à partir des axes 1a, 2a respectivement. Les rainures 11 des roues motrices 3 sont équipées chacune d'un moyen autobloquant 12 qui agrippe le lien 5 lorsqu'il se trouve, du fait de la rotation de l'élément rotatif moteur 1, dans la portion active 6a du cercle d'entraînement 6.

De même, chacune des rainures 11 des roues réceptrices 4 sont équipées de moyens autobloquants 13 qui agrippent le lien 5 lorsque lesdits moyen autobloquants 13 se trouvent dans la portion active 7a du fait de la rotation de l'élément rotatif récepteur 2. Chaque portion du lien 5 se trouve ainsi successivement à passer dans le « brin tendu » 9 puis à être agrippée par les moyens autobloquants 12 dans la portion active 6a puis à être libérée du moyen autobloquant 12 et entrer dans le « brin mou » 10 puis à entraîner les roues réceptrices 4 grâce à l'agrippement des moyens autobloquants 13.

Comme il sera expliqué plus loin, les moyens autobloquants 12, 13 du mode de réalisation illustré sont également des moyens auto-débloquants 12, 13 car successivement ils bloquent automatiquement la portion de lien 5 arrivant sur une des roues 3, 4 puis débloquent automatiquement cette même portion de lien lorsqu'elle quitte la roue. Pour la suite de la description, les expressions "moyens autobloquants" et "moyens auto-débloquants" désignent les mêmes moyens.

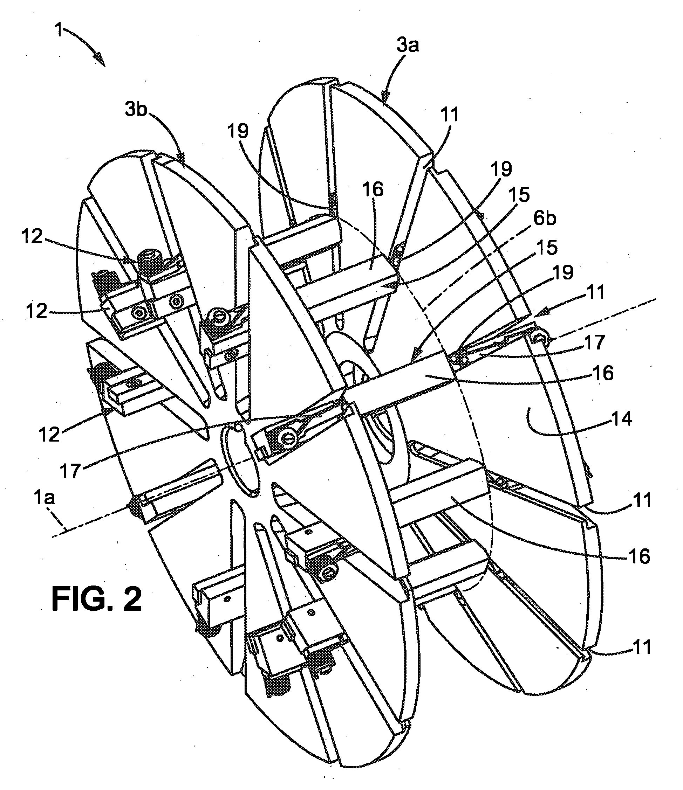

Comme illustré en figure 2, la paire 3 de roues motrices est constituée d'une roue 3a et d'une roue 3b présentant chacune une surface sensiblement conique 14. Les surfaces coniques des deux roues 3a et 3b sont coaxiales à l'axe 1a de l'élément rotatif moteur 1 et en regard l'une de l'autre. Les rainures 11 de chacune des roues 3a, 3b s'étendent le long de la surface conique 14 correspondante. Autrement dit, les rainures 11 constituent des guides pour les moyens autobloquants 12. Chaque guide d'une même roue 3a, 3b présente un angle aigu par rapport à l'axe 1a sensiblement identique audit angle des autres guides de cette roue.

Chacun des moyens autobloquants 12 comprend un support 31 incluant une portion de liaison 15 s'étendant sensiblement parallèlement à l'axe 1a et en butée sur chacune des surfaces coniques 14 des roues 3a et 3b, de façon à ce qu'une surface d'appui 16 de chacune des portions de liaison 15, soit sensiblement tangentes à un cylindre d'appui 6b coaxial avec l'axe 1a et le long duquel le lien 5 peut venir s'appuyer.

Chacun des supports 31 comprend à chacune de ses extrémités axiales un moyen de tenue et de rappel 17 d'un élément de coincement 19. Le moyen 17 comprend un bras sensiblement articulé par rapport au support 31 et tenant l'élément de coincement 19 au bout du bras, ainsi qu'un ressort de rappel 18.

La paire de roues réceptrices 4 est strictement identiques à la paire de roues motrices 3a et 3b. L'élément rotatif 2 ne diffèrent de l'élément rotatif 1 que par le moyen autobloquant 13 qui est différent du moyen autobloquant 12 et qui sera détaillé plus loin.

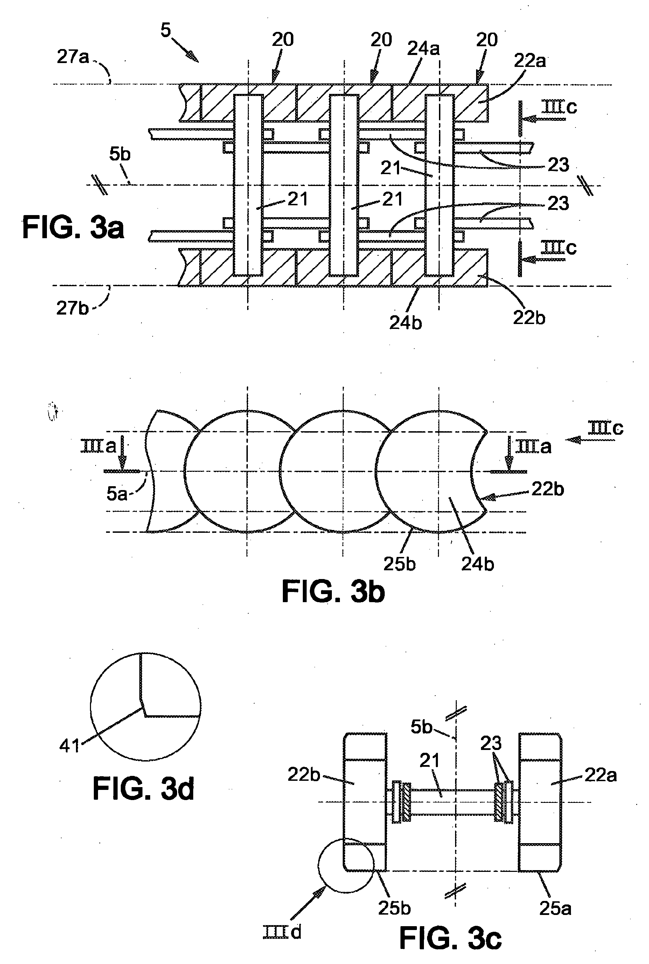

Comme illustré aux figures 3a à 3d, le lien 5 peut se présenter sous la forme d'une chaîne constituée de maillons 20 présentant chacun, un axe d'articulation 21 ainsi que deux semelles 22a, 22b emmanchées à chaque extrémité de l'axe d'articulation 21. Les axes d'articulation 21 sont reliés par des éléments d'articulation 23 inextensibles.

Les maillons 20 sont des portions du lien 5 qui présentent chacun une direction longitudinale qui s'étend perpendiculairement aux axes d'articulation 21 et est sécante à l'axe d'articulation du maillon 20 et à l'axe d'articulation du maillon immédiatement antérieur. La chaine s'étend le long de la boucle fermée 5a. Lorsqu'un maillon 20 donné est dans un des brins 9, 10, la direction longitudinale du maillon 20 est confondue avec la boucle fermée 5a, à l'endroit du maillon 20. Lorsque le maillon 20 est situé sur l'une des portions actives 6a, 7a, la direction longitudinale du maillon 20 est parallèle et sensiblement confondue avec la tangente à la portion active 6a, 7a à l'endroit du maillon 20. Pour décrire simplement les deux situations, on dira que la portion du lien 5 que représente le maillon 20 présente une direction longitudinale qui est tangente à la boucle fermée 5a.

Comme illustré en figure 3b, chacune des semelles se présente sous la forme d'un croissant de lune et comprend d'un côté une portion circulaire concave et de l'autre une portion circulaire convexe de même rayon. Le rayon des deux portions est choisi pour que la portion concave d'un maillon soit sensiblement contiguë d'une portion convexe appartenant à la semelle d'un maillon 20 immédiatement adjacent. Ainsi, lorsque les éléments d'articulation 23 pivotent autour de l'axe d'articulation 21, les portions concaves des semelles pivotent également.

Chacune des semelles 22a, 22b présentent une surface d'agrippement 24a, 24b, opposées l'une de l'autre et sensiblement perpendiculaires aux axes 21 d'articulation des maillons 20. Les semelles 22a et 22b présentent également des surfaces d'appui 25a et 25b s'étendant axialement à la périphérie des portions circulaires convexes des semelles 22a, 22b.

Avantageusement, les semelles 22a, 22b peuvent présenter un chanfrein 41 illustré en figure 3d pour entrer en contact avec les surfaces coniques 14. Ainsi chaque maillon 20 du lien 5 est en appui, soit sur la surface conique 14, soit sur la surface d'appui 16 lorsque la surface conique 14 est interrompue par les rainures de guidage 11. Le guidage entre la surface conique 14 et les chanfreins 41 permet d'éviter que la trajectoire de guidage du lien 5 soit polygonale. Cela évite les variations instantanées du rapport de transmission. Par ailleurs, lorsque le lien 5 entre en contact avec des roues 3 et 4, un entraînement résiduel par friction se produit. Toutefois pour transmettre la puissance, le système ne nécessite pas de tension du lien 5 autre que celle engendrée par le couple dans le brin tendu 9. Cet entraînement résiduel par les chanfreins 41 demeure infime au regard de l'entraînement assuré par l'auto blocage des moyens d'agrippement 13.

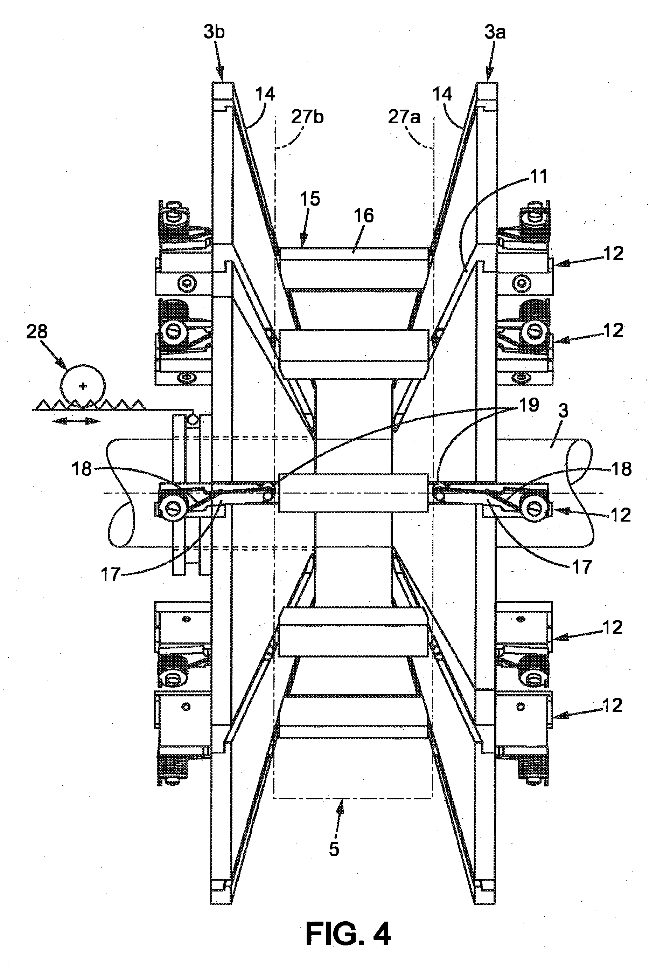

Comme illustré en figure 4, la chaîne 5 est enroulée le long du cercle d'entraînement 6a en ayant les surfaces d'appui 25a, 25b des maillons 20 qui s'appuient sur la surface d'appui 16 de chacune des portions de liaison 15. Le diamètre du cercle d'entraînement 6a est égal au diamètre du cylindre d'appui 6b auquel on ajoute deux fois le rayon des surfaces d'appui 25a, 25b.

D'une manière générale, On appelle ligne neutre 37 d'une portion du lien 5, la ligne de la portion qui défile à une vitesse longitudinale identique que ladite portion du lien 5 se trouve dans les portions actives 6a ou 7a des cercles d'entraînement ou dans les brins tendus ou mous 9, 10. Lorsque la portion de lien passe dans une zone active 6a, 7a, la distance de la ligne neutre 37 à l'axe de l'arbre est égale au rayon du cercle d'entraînement correspondant. Dans le cas où le lien 5 est une chaîne constituée de maillons 20 articulés, la ligne neutre 37 d'un maillon correspond à la position de l'axe d'articulation 21 du maillon 20.

Chacune des surfaces d'appui 16 est sensiblement parallèle à l'axe moteur 1a. Les axes d'articulation 21 de chacun des maillons 20 sont également sensiblement parallèles à l'axe moteur 1a. Chacune des premières surfaces d'agrippement 24a des maillons 20 sont toutes sensiblement contenues dans un même premier plan d'agrippement 27a sensiblement perpendiculaire à l'axe 1a. De même, toutes les surfaces d'agrippement 24b des maillons 20 sont sensiblement contenues dans un deuxième plan d'agrippement 27b lui aussi sensiblement perpendiculaire à l'axe 1a.

L'ensemble des deux semelles 22a, 22b et de l'axe d'articulation 21, forment un ensemble rigide. Ainsi, les efforts parallèles aux axes d'articulation 21 exercés sur les surfaces d'agrippement 24a, 24b opposées, n'affectent pas l'articulation des maillons 20 entre eux.

La roue motrice 3a est montée fixe sur un arbre moteur. En revanche, la roue motrice 3b est montée glissante axialement mais toujours solidaire en rotation avec l'arbre moteur grâce à des clavettes non représentées. On comprend que lorsque la roue 3b est approchée de la roue 3a par l'actionnement d'un dispositif d'entraînement axial 28, le diamètre du cylindre d'appui 6b du lien 5 augmente ainsi que le diamètre du cercle 6a d'entraînement du lien 5.

Avantageusement, chacune des roues motrices 3 et réceptrice 4 est équipée d'une commande. Ces deux commandes varient en sens opposé de manière à compenser l'augmentation du cercle d'entraînement 6a sur les roues motrices 3 par une diminution du diamètre du cercle d'entraînement 7a des roues réceptrices 4 et inversement.

Dans une variante, les deux roues motrices 3a et 3b peuvent être libres axialement par rapport à l'arbre moteur. Dans cette variante, le dispositif d'entraînement axial fait varier la distance axiale relative entre les deux roues 3a, 3b.

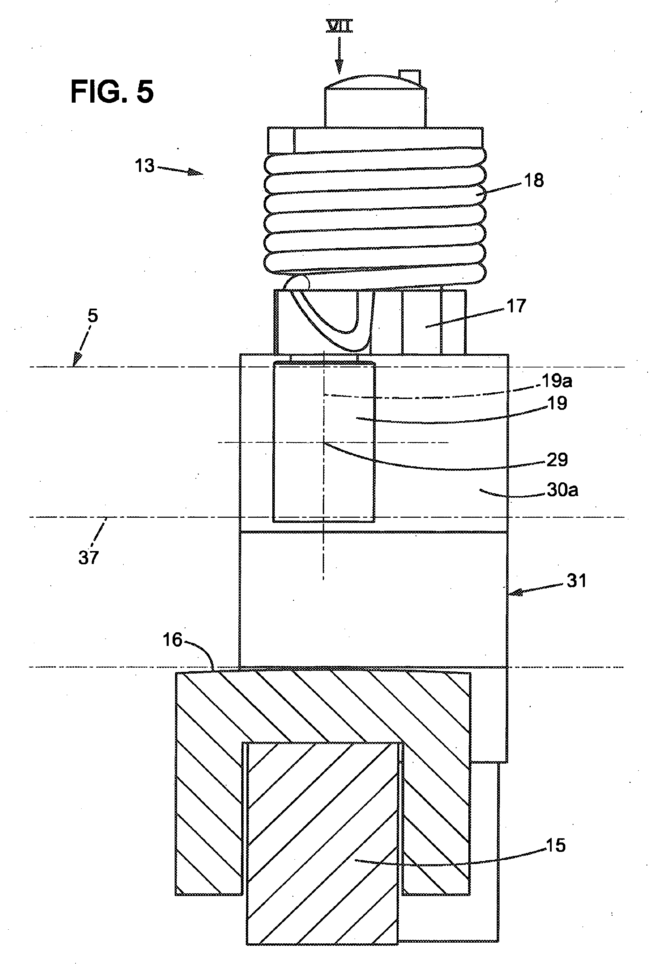

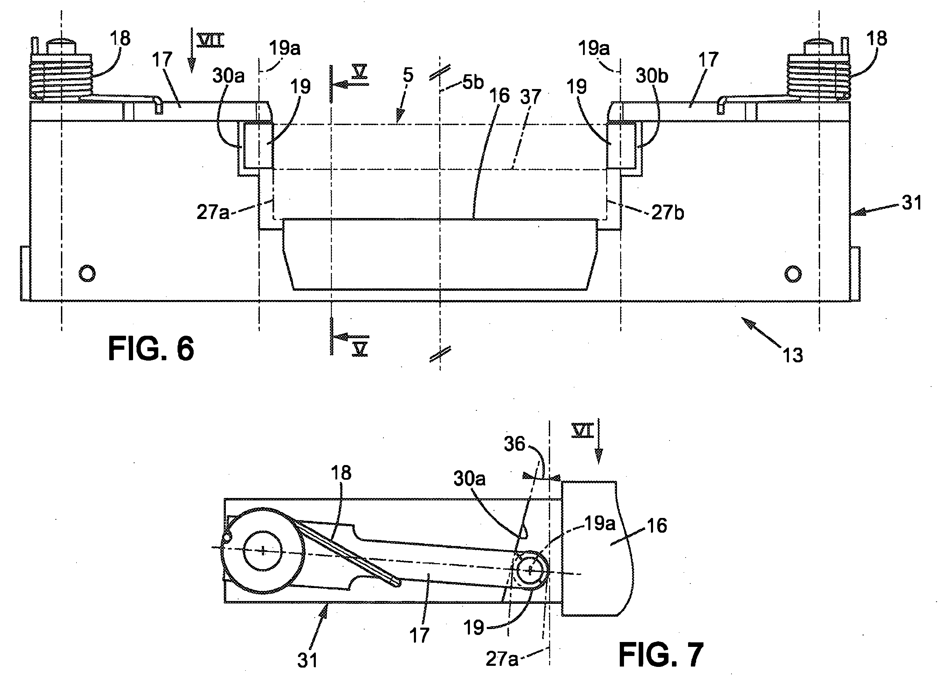

On va, à l'aide des figures 5 à 7, décrire les moyens autobloquants 13 équipant les roues réceptrices 4. Comme illustré aux figures 5 et 6, chacun des moyens autobloquants 13 comprend le support 31 incluant la portion de liaison 15 et à chaque extrémité, un moyen de tenue et de rappel 17 d'un élément de coincement 19. L'élément de coincement 19 est un galet cylindrique monté libre en rotation autour d'un axe 19a, sensiblement radial par rapport à l'axe 2a de l'élément rotatif récepteur 2. Dans une variante, l'élément de coincement 19 peut être un tonneau. Dans tous les cas, le barycentre des actions de pressage de l'élément de coincement 19 sur les plans d'agrippement 27a et 27b est situé à un point d'agrippement 29 plus éloigné radialement de l'axe 2a que la ligne neutre 37 du lien 5.

Comme illustré aux figures 6 et 7, l'un des éléments de coincement 19 est rabattu par l'un des moyens de tenu et de rappel 17 de manière à être coincé entre le plan 27a d'agrippement du lien 5 et une surface de coincement 30a du support 31 situé en regard du plan 27a d'agrippement du lien 5. L'autre élément de coincement 19 est rabattu par l'autre moyen de tenu et de rappel 17 de manière à être coincé entre le plan d'agrippement 27b et une surface de coincement 30b du support 31. L'articulation des deux bras 17 par rapport au support 31 est telle que les éléments de coincement 19 tenus par ces bras 17 peuvent glisser ou rouler le long des surfaces de coincement 30a ou 30b. Les surfaces de coincement 30a, 30b sont sensiblement symétriques par rapport à un plan de symétrie 5b du lien 5 qui est également perpendiculaire aux axes 1a, 2a et présentent un angle de coincement 36 par rapport aux plans d'agrippement. Le support 31 assure la rigidité relative entre les deux surfaces de coincement 30a, 30b.

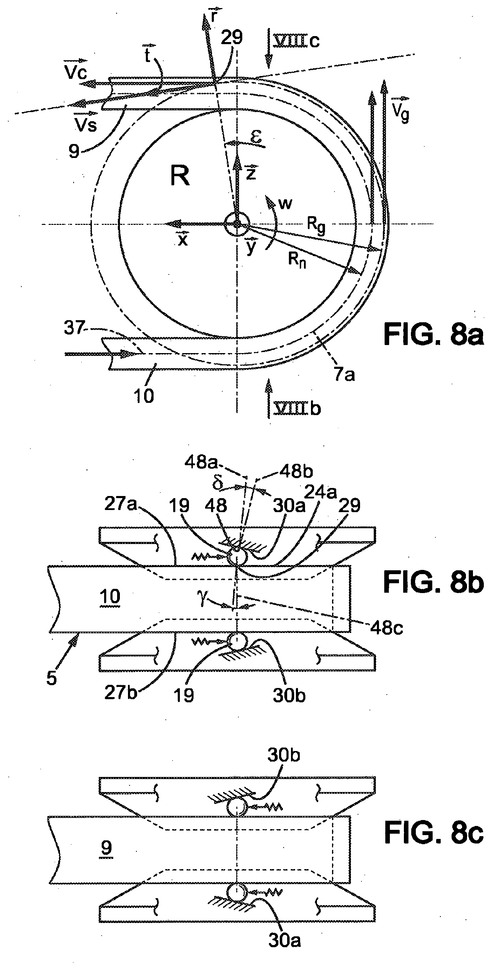

Comme illustré à la figure 8b, l'angle de coincement 36 des moyens autobloquants 13 des roues réceptrices, est orienté de manière que les surfaces de coincement 30a et 30b se rapprochent des plans d'agrippement 27a, 27b du lien 5 du côté aval de l'élément de coincement 19 et s'en écarte du côté amont. Les moyens de tenue et de rappel 17 maintiennent les éléments de coincements 19 contre les surfaces d'agrippement 24a et 24b et contre les surfaces de coincement 30a et 30b. Ainsi, les surfaces d'agrippement 24a et 24b entraînent les éléments de coincement 19, lesquels entraînent à leur tour les surfaces de coincement 30a et 30b. Ainsi, lorsqu'une portion du lien 5 quitte le « brin mou » 10 et commence son enroulement autour du cercle d'entraînement 7a, le défilement du lien 5 entraîne les roues réceptrices 4.

Plus précisément, considérons le point d'agrippement 29 comme étant le barycentre des efforts de pression de contact entre l'élément de coincement 19 et la surface d'agrippement 24a du maillon 20 en regard. Appelons « point d'appui » 48 le barycentre des efforts de pression de contact entre l'élément de coincement 19 et la surface de coincement 30a correspondante, et « ligne d'action » 48a, la ligne passant par le point d'appui 48 et le point d'agrippement 29. La ligne d'action 48a présente un angle γ avec la normale 48c à la surface d'agrippement 24a et un angle δ par rapport à la normale 48b à la surface d'appui 30a. Lorsque l'élément de coincement 19 est symétrique de révolution, les angles γ et δ sont identiques et égaux à la moitié de l'angle de coincement 36. De plus, l'arc-boutement a lieu dès que les matériaux en présence sont tels que tg(γ) est inférieure au coefficient de frottement statique de l'élément de coincement 19 sur le lien 5 et que tg(δ) est inférieure au coefficient de frottement statique de l'élément de coincement 19 sur la surface de coincement 30a du support.

La portion de lien qui vient d'être coincé poursuit sa course le long de la portion active 7a. Durant cette course, chaque élément de coincement 19 reste arc-bouté entre la surface de coincement 30a, 30b et la surface d'agrippement en regard 24a, 24b. Si W est la vitesse de rotation angulaire de la roue réceptrice 4 et $R_n$ le rayon du cercle d'entraînement 7 sur lequel s'enroule la ligne neutre 37, la vitesse de défilement $V_c$ du lien le long de sa ligne neutre 37 est $V_c = W.R_n$. En revanche, puisque le point d'agrippement 29 est situé radialement au-delà de la ligne neutre 37 à un rayon $R_g$, la vitesse linéaire Vg de l'ensemble de la surface 30a, de l'élément de coincement 19 et de la surface d'agrippement 24a en regard, considérée au point d'agrippement 29, est $V_g = W.Rg$. Elle est supérieure à la vitesse linéaire $V_c$ du lien.

Considérons maintenant une portion du lien 5 telle qu'un maillon 20 ayant parcouru un angle ε dans le brin tendu 9, c'est-à-dire venant juste de rentrer dans le brin tendu 9. L'élément de coincement 19 reste potentiellement mobile le long d'une direction de coincement dans un plan $(\vec{t}, \vec{y})$, où $\vec{t}$ est tangent au cercle parcouru par l'élément de coincement 19 et $\vec{y}$ est parallèle aux arbres 1, 2. Pour savoir si l'élément de coincement 19 reste bloqué ou se débloque automatiquement, il y a lieu de comparer les vitesses linéaires du point de la surface de coincement 30a qui était coincée par l'élément 19 et du point de la surface d'agrippement 24a qui était coincée par le même élément 19. Il y a donc lieu de considérer les différentes vitesses réelles dans un repère d'axes liés au support 31, notamment de les projeter dans le plan $(\vec{t}, \vec{y})$. Ainsi, l'élément de coincement 19 voit dans le plan $(\vec{t}, \vec{y})$, d'un côté une surface de coincement animée d'une vitesse linéaire $V_s = W.R_g$ et de l'autre une surface d'agrippement 24a qui s'est ralentie et présente une vitesse $V_c$ dont la projection dans le plan $(\vec{t}, \vec{y})$ est $V_c = W.R_n.\cos ε$. Autrement dit, quelque soit ε, on a toujours $V_c < V_s$. En se reportant à la figure 8c, on voit que le ralentissement du lien 5 a comme effet d'automatiquement débloquer le moyen autobloquant 13.

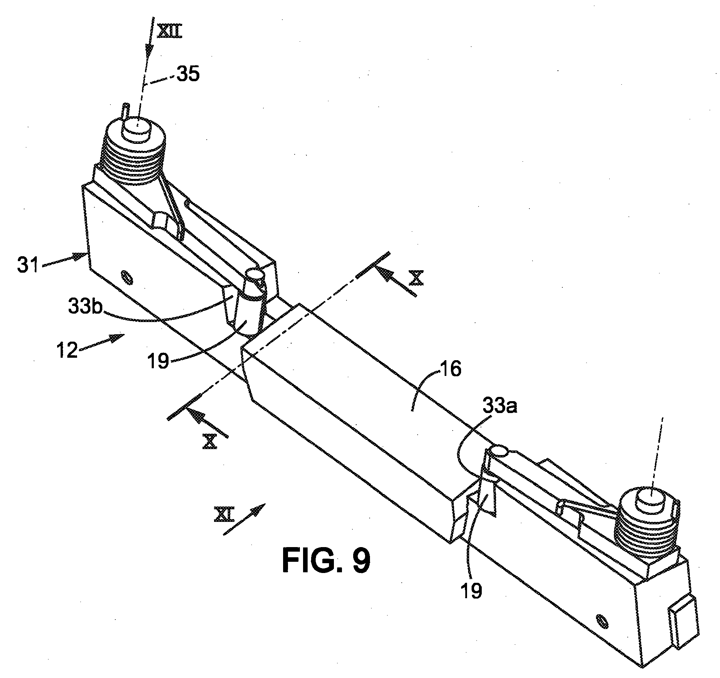

On va maintenant, à l'aide des figures 9 à 13, décrire le fonctionnement du moyen autobloquant 12 équipant les roues motrices. Comme pour le moyen autobloquant 13, on retrouve un élément de coincement 19 entraîné dans une direction de coincement 32 par le moyen de tenue et de rappel 17. L'élément de coincement 19 vient s'arc-bouter entre une surface de coincement 33a, 33b située en regard des mêmes surfaces d'agrippement 24a, 24b du lien 5.

L'élément de coincement 19 presse sur la surface d'agrippement en regard 24a, 24b, en un point d'agrippement 34.

Dans le mode de réalisation illustré, les moyens autobloquant 12 présentent deux différences par rapport aux moyens autobloquant 13. D'une part, le bras de rappel 17 est sensiblement articulé autour d'un axe de rotation 35 incliné de manière que la direction de coincement 32 présente un angle supplémentaire β par rapport au plan perpendiculaire au rayon et qui passe par le point d'agrippement 34. D'autre part, le point d'agrippement 34 est positionné de manière à être à une distance Rg de l'axe 1a inférieure à la distance séparant la ligne neutre 37 du lien 5 de l'axe 1a.

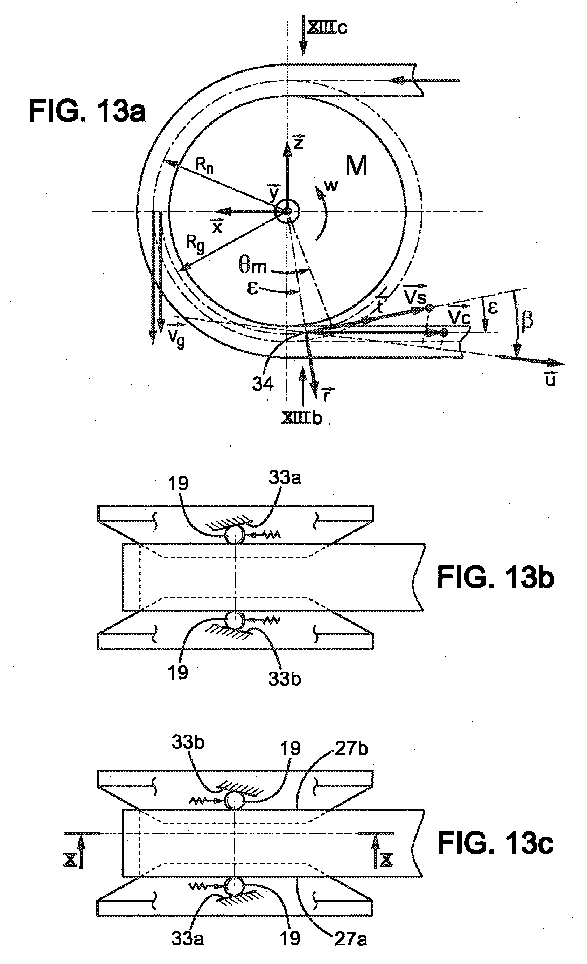

Comme illustré à la figure 13c, les surfaces de coincement 33a, 33b, sont situées de manière à s'approcher du plan d'agrippement 27a, 27b, en amont de l'élément de coincement 19. Le moyen de tenue et de rappel 17 amène l'élément de coincement 19 jusqu'à être en contact à la fois avec la surface de coincement 33a, 33b et avec les surfaces d'agrippement 24a, 24b en regard. Lorsqu'un couple moteur est exercé sur la roue motrice 3, la surface de coincement 33a, 33b pousse l'élément de coincement 19 qui roule le long du plan d'agrippement 27a, 27b du lien 5 jusqu'à augmenter l'arc-boutement et obtenir une immobilisation relative du lien 5 par rapport au support 31.

Durant toute la course le long de la portion active 6a du cercle d'entraînement moteur 6, les surfaces de coincement 33a, 33b, l'élément de coincement 19 et les portions en regard des surfaces d'agrippement 24a, 24b restent immobiles l'une par rapport à l'autre et sont animées d'une vitesse tangentielle $V_g$=W.$R_g$.

Considérons maintenant une portion du lien ayant parcouru un angle ε dans le brin mou 10, c'est-à-dire venant juste d'entrer dans le brin mou 10. Les vitesses relatives vues par l'élément de coincement 19 sont à considérer dans le repère $(\vec{u},\vec{y})$ déterminé par l'axe de rotation 35. La surface de coincement 33a, 33b est animée d'une vitesse dont l'intensité est $V_s$=W.$R_g$ et qui est incliné par rapport au plan de la direction de coincement $(\vec{u},\vec{y})$ dudit angle β constant. Le point d'agrippement 34 du lien 5 présente une vitesse d'intensité $V_c$ = W.$R_n$ et qui est parallèle au « brin mou » 10 c'est-à-dire présente un angle β-ε par rapport au plan $(\vec{u},\vec{y})$. En se reportant à la figure 13b, on voit que la condition de déblocage du moyen autobloquant 19 est dans le repère $(\vec{u},\vec{y})$ : $V_s$<$V_c$. Autrement dit, la condition de déblocage automatique s'écrit quand on la projete dans le repère $(\vec{u},\vec{y})$ :

$$W.R_g.\cos\ \beta\ <\ W.R_n.\cos(\beta\ -\ \varepsilon).$$

De manière avantageuse, on choisit l'angle β supérieur ou idéalement égal à la moitié de θm qui est l'angle à partir duquel le brin mou 10 n'est plus en regard des surfaces de coincement 33a, 33b. On a donc pour tout ε compris entre 0 et θm : $\varepsilon \leq 2.\beta$, donc $\cos(\beta) \leq \cos(\beta-\varepsilon)$. Or, vu la position radiale du point d'agrippement 34, $R_g < R_n$ donc la condition de décoincement automatique est réalisée pour tout ε compris entre 0 et θm.

Le mode de réalisation ci-dessus peut se combiner avec de nombreuses variantes.

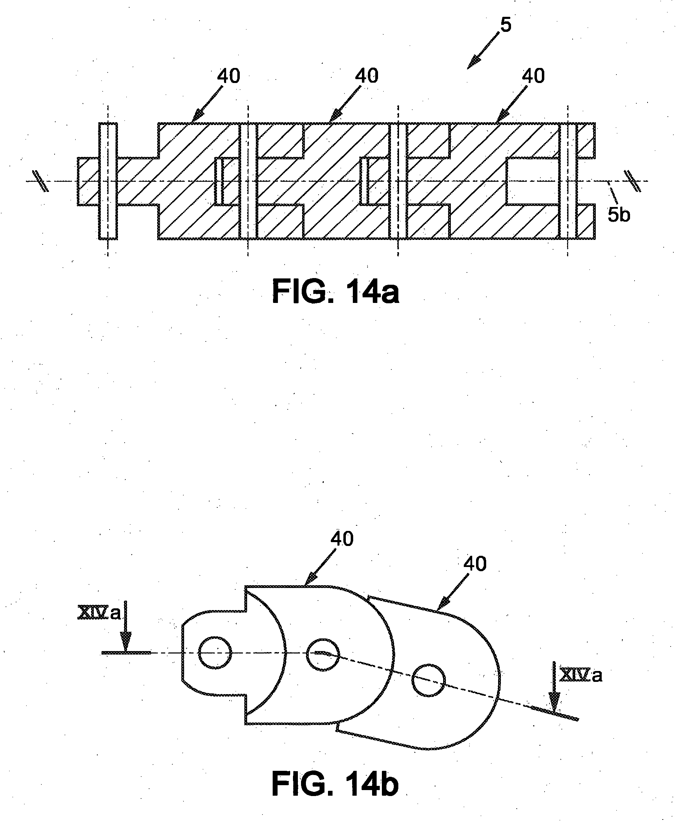

Le lien 5 peut être une chaîne illustrée en figure 14 avec des maillons 40 dont les surfaces d'agrippement appartiennent à un élément rigide distinct de l'axe d'articulation.

Les surfaces d'agrippement présentent une portion droite. Une telle forme présente une surface utile pour l'agrippement plus large relativement que la variante illustrée aux figures 3a à 3d.

Dans une autre variante, le lien 5 peut être une courroie non articulée. Avantageusement, la courroie peut contenir une âme inextensible ainsi qu'une série d'inserts métalliques s'étendant transversalement à la courroie, de manière que celle-ci soit apte à encaisser des efforts de pincement très élevés sans affecter la souplesse de la courroie en flexion.

L'élément de coincement 19 du moyen autobloquant 12 peut avoir une forme identique ou différente de celle de l'élément bloquant du moyen autobloquant 13. Les éléments de coincement du même moyen autobloquant peuvent être identiques ou différents et peuvent varier entre les moyens autobloquants guidés par des guides différents.

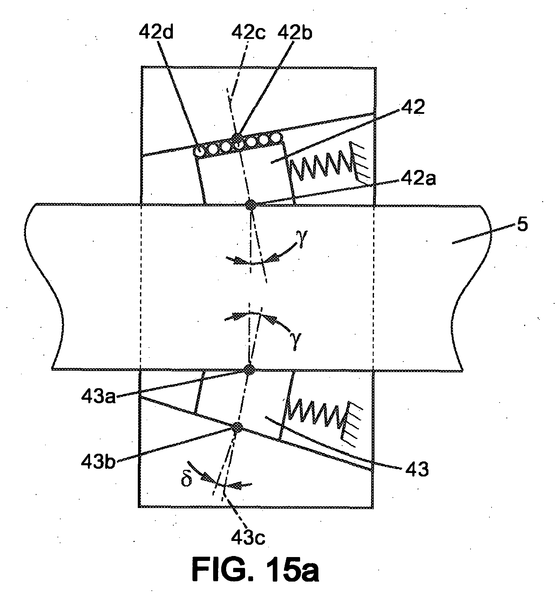

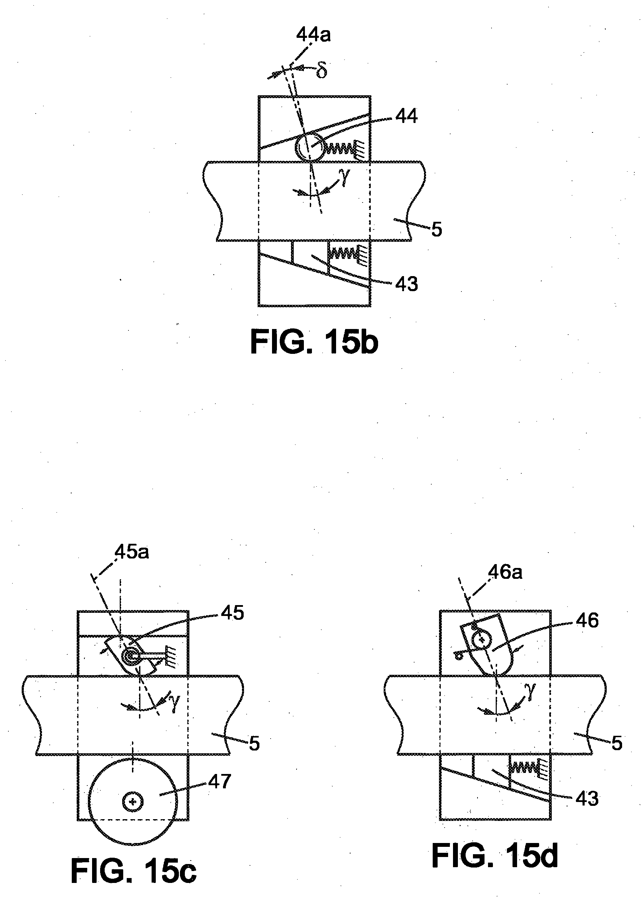

Dans une variante, les éléments de coincement peuvent être des billes 44 (figure 15b) ou des tonneaux. Alternativement ou en combinaison, des éléments de coincement peuvent coopérer avec des surfaces d'agrippement par une surface plus étendue de manière à réduire la pression de hertz. Tel est le cas des cames 42, 45 et 46 des figures 15a, 15c et 15d.

Par ailleurs, l'élément de coincement peut ne pas être mobile au bout du bras de guidage 17. Tel est le cas de la came 46 illustrée en figure 15d.

Comme illustré en figure 15a, le moyen de solidarisation comprend un support équipé d'un élément de coincement 42 et d'un élément de coincement 43. L'élément de coincement 42 peut être un sous ensemble comprenant une semelle d'appui du côté du lien 5 et des éléments roulants 42d du côté du support. La surface de coincement est inclinée d'un angle γ. L'absence de frottement statique sur la surface de coincement fait que l'effort exercé par chaque élément roulant 42d est perpendiculaire à la surface de coincement. Ils sont sensiblement de même intensité. Ainsi le barycentre 42b des efforts est sensiblement au centre des éléments roulants. De même le barycentre 42a des efforts de la semelle d'appui sur le lien 5 est aussi sensiblement au centre. L'arc-boutement a lieu dès que la ligne d'action 42c présente un angle γ dont la tangente est inférieure au coefficient de frottement de la semelle d'appui avec la surface d'agrippement tangentiel du lien 5. L'élément de coincement 42 est auto-débloquant dès que le lien se déplace relativement au support vers la droite de la figure 15a.

Dans une alternative, les éléments roulants peuvent être remplacés par une couche en matériau de faible coefficient de frottement, tel que le téflon® ou par un film d'huile.

L'élément de coincement 43 frotte à la fois sur le lien 5 et sur le support. La ligne d'action 43c est sensiblement inclinée d'un même angle γ par rapport à la normale au lien 5. La surface de coincement est inclinée d'un angle γ + δ. Il y a arc-boutement lorsque les tg(γ) et tg(δ) sont simultanément inférieurs aux coefficients de frottement de l'élément de coincement 43 avec les surfaces d'appui correspondantes. L'élément de coincement 43 considéré isolément n'est pas auto débloquant. Cependant, le fait que l'élément de coincement 42 le soit suffit à ce que le moyen de solidarisation illustré en figure 15a soit auto débloquant lorsque le support arrive à la fin de la portion active d'un cercle d'entraînement.

La figure 15c illustre un mode de réalisation où les supports sont équipés d'un seul élément de coincement, la contre réaction de l'effort du coincement étant assurée par une roue 47 libre en rotation. Dans un autre mode de réalisation non illustré, la contre réaction de l'effort du coincement est assurée par un épaulement du support 31 lui-même qui est parallèle au lien 5. Ces variantes peuvent se combiner avec tous les autres modes de réalisation.

Dans tous les modes illustrés aux figures 15a à 15d, l'arc-boutement de l'élément de coincement, respectivement 42, 44, 45, 46 a lieu car la ligne d'action correspondante 42c, 44a, 45a, 46a est inclinée d'un angle γ dont la tangente est inférieure au coefficient de frottement de l'élément du coincement sur le lien 5. Cette condition est nécessaire, elle peut n'être pas suffisante.

Dans une variante, l'élément de coincement peut être solidaire, voire monobloc avec le support ou avec le lien. L'élément de coincement est alors élastiquement déformable par rapport au reste de la pièce dont il est solidaire.

Dans une autre variante, le mécanisme peut être bidirectionnel chaque roue pouvant être alternativement motrice ou réceptrice dans ce cas, chacune des roues peut être équipée à la fois d'une pluralité de moyens autobloquants 12 de type moteur et d'une pluralité de moyens autobloquants 13 de type récepteur. Toutefois, seule l'une des deux pluralités est active sur la même roue. Le bras 17 peut être équipé d'un moyen de débrayage permettant d'éloigner l'élément de coincement du lien 5 de manière à désactiver le moyen autobloquant correspondant.

Dans une autre variante, la variation du diamètre des cercles d'entraînement 6 et/ou 7 peut être obtenue sans surface conique et/ou sans inclinaison des guides par rapport aux axes.

Dans une variante, le mécanisme peut comprendre un seul arbre équipé de moyens autobloquants, de type moteur et/ou de type récepteur. L'autre arbre peut être équipé de moyens d'agrippement classiques tels qu'un pignon pour chaine. Dans le cas où le diamètre d'entraînement des moyens autobloquants est variable, il peut être avantageux d'ajouter une roue pour tendre le brin mou.

Le mécanisme présente de nombreuses applications industrielles qui utilisent un mouvement de rotation. Il peut être utilisé par exemple pour réduire la consommation d'énergie d'un véhicule ou pour améliorer la production d'énergie d'une génératrice.

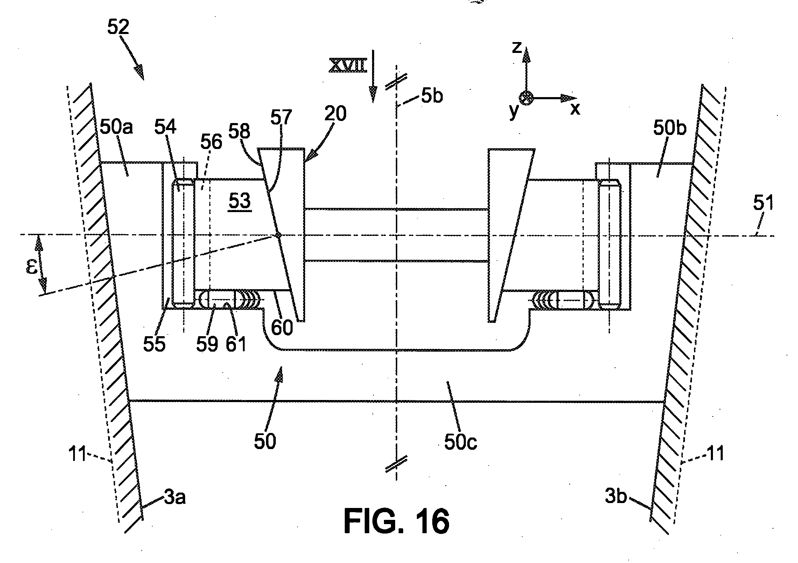

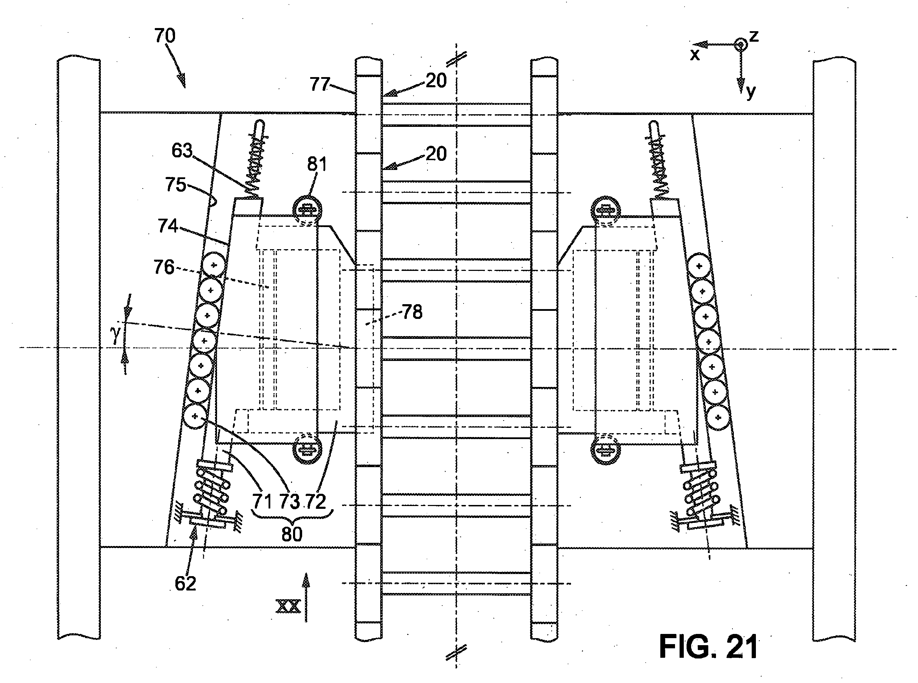

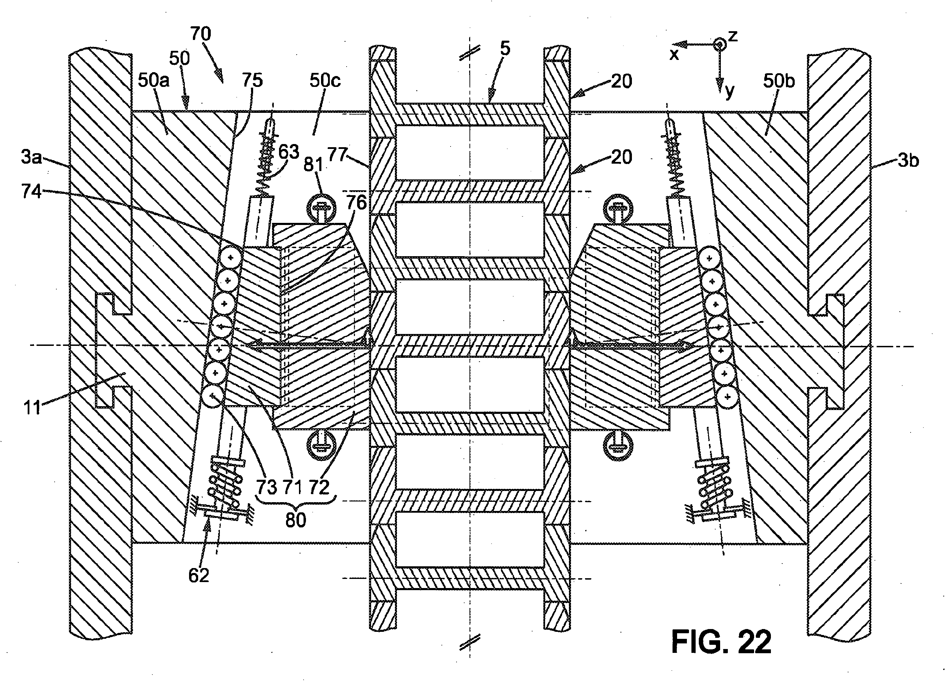

On va à l'aide des figures 16 à 24 décrire une deuxième famille de modes de réalisation de l'invention qui diffèrent des modes de réalisation précédemment décrits par leurs moyens autobloquants. L'aptitude de ces moyens autobloquants à s'auto-débloquer exploite un phénomène différent de celui illustré aux figures 5 à 13. Dans les modes de réalisation précédemment décrits, les portions de lien s'enroulaient sur les surfaces coniques 14 ou sur la surface d'appui 16 du support 31, de sorte que l'effort radial exercé par la portion de lien en prise avec un moyen autobloquant est directement transmis par le support 31 et non pas par l'élément de coincement 19, 42, 43, 44, 45, 46.

Dans la famille de modes de réalisation décrits ci-après, l'effort radial exercé par la portion de lien du fait de la transmission d'un couple est transmis à l'élément de coincement puis au support avant de parvenir aux roues motrices ou réceptrices. L'aptitude du moyen autobloquant à s'auto-bloquer et à s'auto-débloquer exploite l'apparition et la disparition d'une composante radiale d'effort exercée par la portion de lien selon que celle-ci se trouve dans la partie enroulée ou dans la partie rectiligne de la trajectoire du lien. Toutefois, cette deuxième famille de modes de réalisation de l'invention conserve le fait que l'effort de pincement de la portion de lien se fait par arc-boutement d'un élément de coincement.

Les modes de réalisation qui vont suivre comprennent de manière analogue aux modes précédemment décrits un premier et un deuxième élément rotatif 1, 2 mobiles autour de leur axe respectif 1a, 2a. Les éléments rotatifs 1, 2 sont composés chacun d'une paire de roues coniques, telles que les roues 3a, 3b. Chacun des modes de réalisation de cette deuxième famille comprend un support **50** en forme générale de U présentant deux montants **50a, 50b** correspondant aux côtés de la forme en U et une partie axiale **50c** du support 50 correspondant au fond du U et sensiblement parallèle aux axes 1a, 2a. Chacun des montants 50a, 50b coulisse sensiblement radialement dans la rainure 11 radiale de la roue correspondante de l'élément rotatif 1, 2. Le support 50, solidaire en rotation de l'élément rotatif correspondant, est situé sur le cercle 6, 7 tant que le mécanisme ne change pas de rapport de transmission.

Chaque moyen autobloquant reçoit une portion 20 du lien 5 et définit un plan tangent **51** qui est parallèle à l'axe 1a, 2a et est tangent à la boucle fermée 5a au centre des efforts exercés par le moyen autobloquant sur la portion 20 de lien. On définit une direction axiale **"x"** comme étant la direction parallèle aux axes 1a, 2a, une direction longitudinale **"y",** la direction tangente à la boucle fermée 5a au centre des efforts exercés sur la portion de lien 20, et une direction radiale **"z",** la direction perpendiculaire au plan tangent 51.

Les moyens autobloquants qui vont être décrits sont sensiblement symétriques par rapport au plan 5b de symétrie du lien 5 et seule une moitié de ces moyens autobloquants sera décrite. Cependant, cette symétrie n'est pas obligatoire et des variantes peuvent combiner des moitiés de moyens autobloquants différents de cette même deuxième famille de modes de solution. On peut également combiner une moitié de moyens autobloquants correspondant à un mode de réalisation de cette deuxième famille avec une autre moitié de moyens autobloquants illustrés aux figures 1 à 13 ou dans l'une quelconque des variantes illustrées aux figures 14a, 14b, 15a, 15b, 15c et 15d.

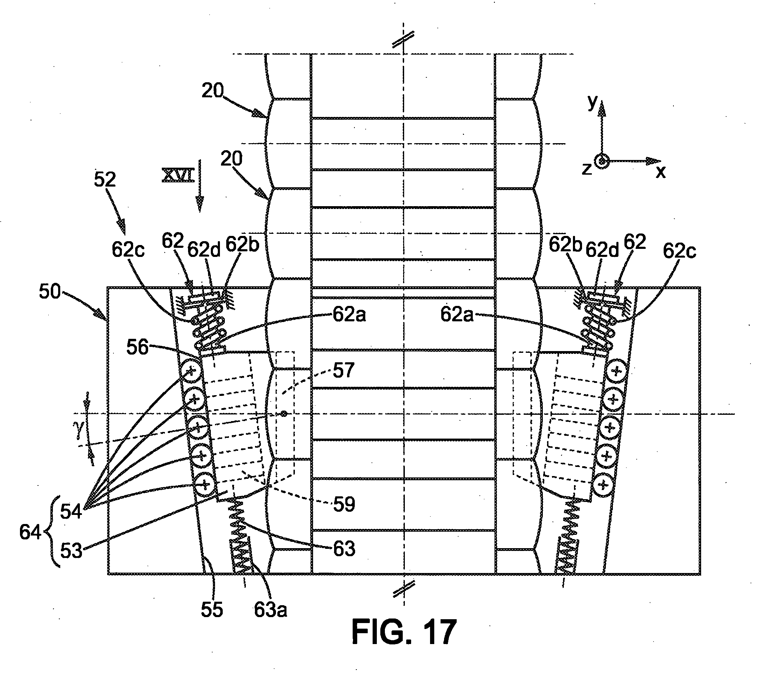

Comme illustré aux figures 16, 17, le premier mode de réalisation de cette deuxième famille comprend un moyen autobloquant **52** comprenant le support 50, une paire de coins d'agrippement **53** et une série de rouleaux principaux **54,** d'axes parallèles à la direction z. Les rouleaux principaux 54 sont intercalés entre une première surface **55** appartenant au montant 50a et une deuxième surface **56** appartenant aux coins d'agrippement 53. Chaque coin d'agrippement 53 présente une troisième surface **57** qui est en appui sur un plan d'agrippement **58** de la portion 20 de lien.

Le moyen autobloquant 52 peut comprendre, comme illustré, des rouleaux auxiliaires **59** intercalés entre une quatrième surface **60** du coin d'agrippement 53 et une cinquième surface **61** de la partie axiale 50c du support 50. Dans une variante du moyen autobloquant 52, la quatrième surface 60 et/ou la cinquième surface 61 sont revêtues d'une couche à faible coefficient de frottement et sont en appui l'une sur l'autre.

La troisième surface 57 est avantageusement plane et parallèle au plan d'agrippement 58 et présente une normale incluse dans un plan (x, z) et est inclinée par rapport à la direction axiale x d'un angle ε visible en figure 16.

Comme illustré en figure 17, la première surface 55 et la deuxième surface 56 sont avantageusement planes et parallèles et présentent une normale incluse dans le plan tangent 51 et sont inclinées par rapport à la direction axiale x d'un angle γ d'arc-boutement.

Le moyen autobloquant 52 comprend en outre une butée mobile **62** constituée d'un corps **62a** monté mobile en translation sensiblement parallèle au plan tangent 51 dans un guidage **62b** fixé au support 50 et d'un ressort précontraint **62c.** Le ressort 62c est monté de manière à pousser un arrêt **62d** du corps 62a contre le guidage 62b et ainsi définir une position de repos de la butée mobile 62. Le corps 62a est toutefois mobile vers une position de recul du côté où la première surface 55 s'écarte du plan 5b de symétrie. Le moyen autobloquant 52 comprend en outre un ressort de rappel **63** comprimé entre le coin d'agrippement 53 et un arrêt **63a** fixé au support 50.

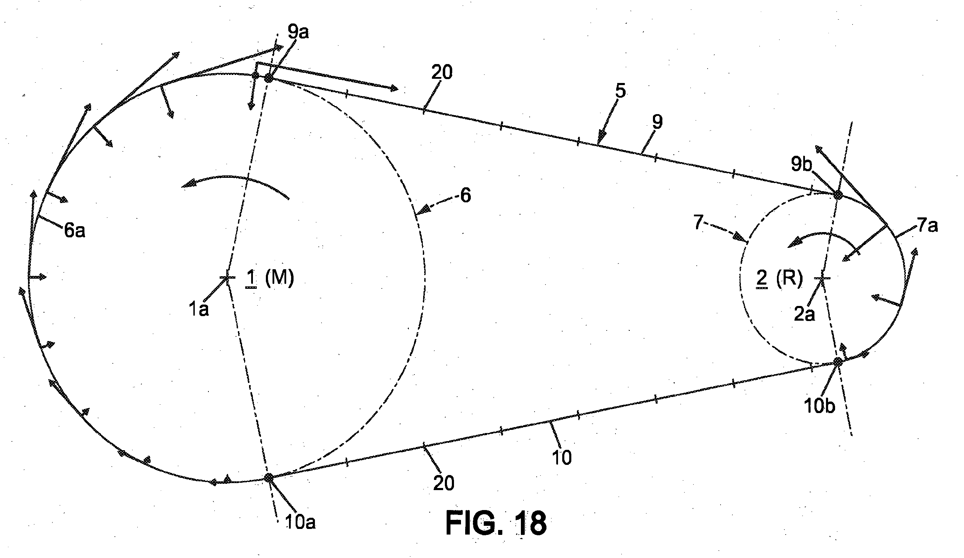

Ont été représentés en figure 18, les efforts exercés par le lien 5 sur chacun des éléments rotatifs 1, 2. L'élément rotatif moteur 1 tourne dans le sens indiqué par la flèche. Le brin 9 est tendu et les portions 20 de lien en prise avec l'élément rotatif moteur 1 exercent un effort s'opposant à la rotation de l'élément rotatif 1. Chacune des portions 20 de lien sont mises en tension longitudinale de la part des portions immédiatement amont et aval de ladite portion. Cette tension longitudinale décroît progressivement depuis les portions de lien se trouvant proches d'un point **9a** de début d'enroulement jusqu'à un point **10a** de fin d'enroulement, pour finalement atteindre une tension résiduelle dans le brin mou 10. Inversement, la tension exercée par le lien 5 sur une portion 20 de lien sur l'élément rotatif récepteur 2 augmente progressivement depuis les portions situées proches d'un point **10b** de début d'enroulement jusqu'à un point 9b de fin d'enroulement.

Chaque portion 20 de lien située dans une des portions actives 6a, 7a des cercles d'entraînement 6, 7 exerce un effort radial qui est proportionnel à la tension longitudinale à laquelle est soumise la portion 20 de lien. Cet effort radial apparaît lorsque la portion 20 arrive au point 9a, 10b de début d'enroulement et disparaît au point 10a, 9b de fin d'enroulement.

On va maintenant décrire le fonctionnement du moyen autobloquant 52. Quand un support 50 est dans une portion non active du cercle 6, ce support ne subit aucun effort de la part du lien 5 et le coin d'agrippemént 53 est poussé par le ressort de rappel 63 dans une position nominale contre la butée mobile 62. Quand un support 50 s'approche d'un point 9a, 10b de début d'enroulement, ce support 50 voit une portion de lien s'approcher radialement de lui. L'angle ε du plan d'agrippement 58 est orienté de manière à repousser vers l'extérieur le coin d'agrippement 53. Le coin d'agrippement 53 reste en position tant que le ressort précontraint 62 peut résister à cet effort. La pression augmente donc entre la troisième surface 57 et le plan d'agrippement 58. En raison de l'élasticité résiduelle du support 50 et de la faible raideur du ressort de rappel 63, le frottement entre la troisième surface 57 et le plan d'agrippement 58 s'accompagne d'un léger entraînement du coin d'agrippement 53 le long de la direction longitudinale "y" dans le sens où la deuxième surface 55 se rapproche du plan de symétrie 5b. Le phénomène d'arc-boutement se produit alors. La pression augmente jusqu'à ce que la réaction du coin d'agrippement 53 compense une partie de la tension longitudinale dans le lien 5 à cet endroit. En effet, la tension dans le brin tendu 9 se répartit sur les différents supports 50 qui sont dans la portion active 6a du cercle d'entraînement 6. Ainsi l'ensemble des supports de la portion active 6a reçoit globalement la différence de tension entre la tension dans le brin tendu 9 et la tension résiduelle dans le brin mou 10.

La liaison mécanique entre le support 50 et la portion 20 de lien est assurée par l'empilement du coin d'agrippement 53 et des rouleaux principaux 54, lesquels constituent des solides de liaison 53, 54. L'ensemble des solides de liaison 53, 54 constitue un élément de liaison **64.** La troisième surface 57 et le plan d'agrippement 58 sont des surfaces d'appui mutuel 57, 58 de l'élément de liaison 64 sur la portion 20 de lien. La première surface 55 est une surface d'appui mutuel 55 de l'élément de liaison 64 sur le support 50 et la deuxième surface 56 est une surface d'appui mutuel entre les solides de liaison 53, 54.

Dans le moyen autobloquant 52, l'élément de liaison 64 est également un élément de coincement 64 qui est arc-bouté entre la première surface 55 et le plan d'agrippement 58. Autrement dit, la première surface 55 et le plan d'agrippement 58 constituent chacun des surfaces d'appui mutuel de coincement 55, 58.

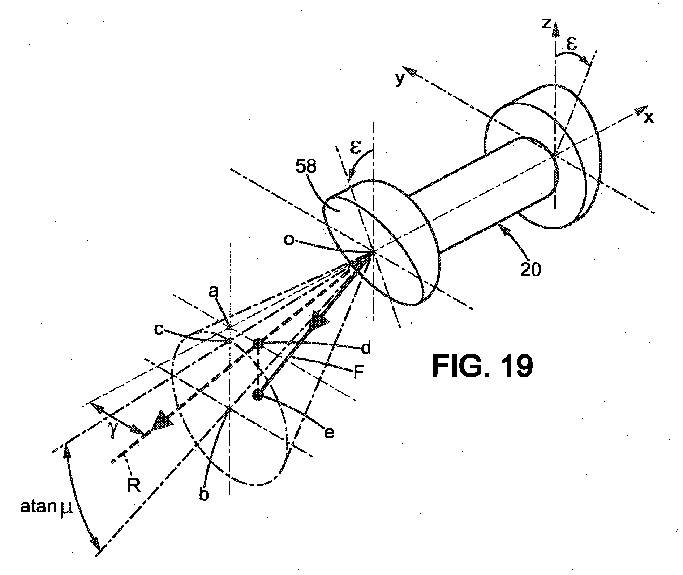

On va à l'aide de la figure 19 décrire la condition d'équilibre de chaque moyen autobloquant 52 en configuration de coincement. Un effort de liaison **F** exercé par la portion 20 de lien sur l'élément de liaison 64 a été illustré en trait gras. Si **"O"** est le centre d'application de l'effort F entre la troisième surface 57 et le plan d'agrippement 58 et **"a"** est un point de l'axe parallèle à l'axe 1a passant par "O", les points d'intersection des différentes directions passant par "O" sont illustrés par l'intersection de cette direction avec le plan (a, y, z). La normale au plan d'agrippement 58 est illustrée par le point "b" sur l'axe (a, z). Le cône de frottement caractérisant l'équilibre statique entre les surfaces d'appui mutuel 57 58 est illustré en traits mixtes forts. Un point **"c"** tel que la tangente à l'angle (b, O, c) est égal au coefficient de frottement μ sur les surfaces d'appui mutuel 57, 58. Un point **"d"** sur l'axe (a, y), tel que l'angle (a, O, c) est l'angle γ) d'inclinaison de la première surface 55. La direction illustrée en pointillés gras passant par le point "d" est une direction de référence **R** qui correspond à l'effort de liaison qui serait transmis au support 50 s'il n'y avait pas de composante radiale à l'effort F effectivement exercé. Cela correspond à l'effort qu'exercerait une portion de lien soumise à la même tension longitudinale, le lien étant rectiligne et tangent au cercle d'entraînement 6, alors que seule la première surface 55 résiste à cet effort.

L'effort F réellement exercé est alors illustré par un point **"e"** à la verticale du point "d".

La condition d'équilibre de la portion 20 de lien sur le support 50 en configuration de coincement est que l'effort F effectivement exercé (point e) soit dans le cône de frottement.

Comme illustré en figure 18, lorsque le moyen autobloquant 52 parcours la portion active 6a de la roue motrice, la composante radiale apparaît au point 9a, diminue progressivement et s'annule au point 10a. En parcourant la portion active 7a de la roue réceptrice, la composante radiale apparaît au point 10b, augmente progressivement et chute soudainement au point 9b.

La condition de déblocage du lien lorsque la portion 20 de lien quitte une portion active 6a, 7a est que le point "d" soit hors du cône de frottement.

Autrement dit, lorsque la composante radiale due à l'enroulement du lien diminue, les surfaces 57 et 58 glissent l'une sur l'autre et constituent des surfaces de déblocage 57, 58.

Dans le moyen autobloquant 52, les surfaces 57, 58 sont également des surfaces d'actionnement 57, 58 car c'est par elles que passe l'effort radial que la portion 20 de lien exerce sur l'élément rotatif correspondant.

On comprend que si la tangente de l'angle ε d'inclinaison du plan d'agrippement 58 est supérieure au coefficient de frottement "μ", alors la condition de débrayage automatique est remplie. Toutefois, le débrayage peut avoir lieu même si tan(ε)<μ. Dès lors la direction de référence R reste hors du cône de frottement.

On va maintenant décrire la manière dont la butée mobile 62 permet de changer de rapport de transmission pendant la transmission du couple. Considérons deux moyens autobloquant 50 successifs dans une portion active 6a, 7a pendant le changement du diamètre du cercle d'entraînement correspondant 6, 7. Si ce diamètre augmente, le moyen autobloquant amont bloque le lien et tire vers lui la portion de lien en prise avec le moyen autobloquant aval. La butée 62 de ce moyen autobloquant aval recule et relâche le coincement. Cela permet au lien de glisser longitudinalement dans le moyen autobloquant aval de manière à s'adapter à l'augmentation du diamètre du cercle d'entraînement. Le moyen autobloquant amont continue pendant cette adaptation à transmettre le couple à l'élément rotatif.

Inversement, si le diamètre du cercle d'entraînement diminue. La tension axiale est entièrement prise par le moyen autobloquant amont et la diminution de diamètre fait chuter la tension perçue dans le moyen autobloquant aval. Cela fait également chuter l'effort radial exercé par la portion de lien en appui sur le moyen autobloquant aval. Cette chute de tension et d'effort radial entraîne le débrayage du moyen autobloquant 52 aval jusqu'à ce que la longueur de lien entre les deux supports successifs diminue jusqu'à une valeur souhaitée. Pendant la diminution de diamètre, seul le moyen autobloquant le plus amont résiste à la tension pour transmettre le couple à l'élément rotatif. Une fois que le diamètre du cercle d'entraînement souhaité a été atteint, les agrippements de portions de lien nouvellement arrivées dans la portion active prennent le relais. La tension prise par chacun des moyens autobloquants s'équilibre progressivement.

Une variante non illustrée du moyen autobloquant 52 comprend un support 50 présentant une première surface dont la normale est inclinée à la fois par rapport au plan (x, z) de l'angle γ précité, et par rapport au plan (x, y) de l'angle ε précité. Il n'y a plus besoin de rouleaux auxiliaires 59.

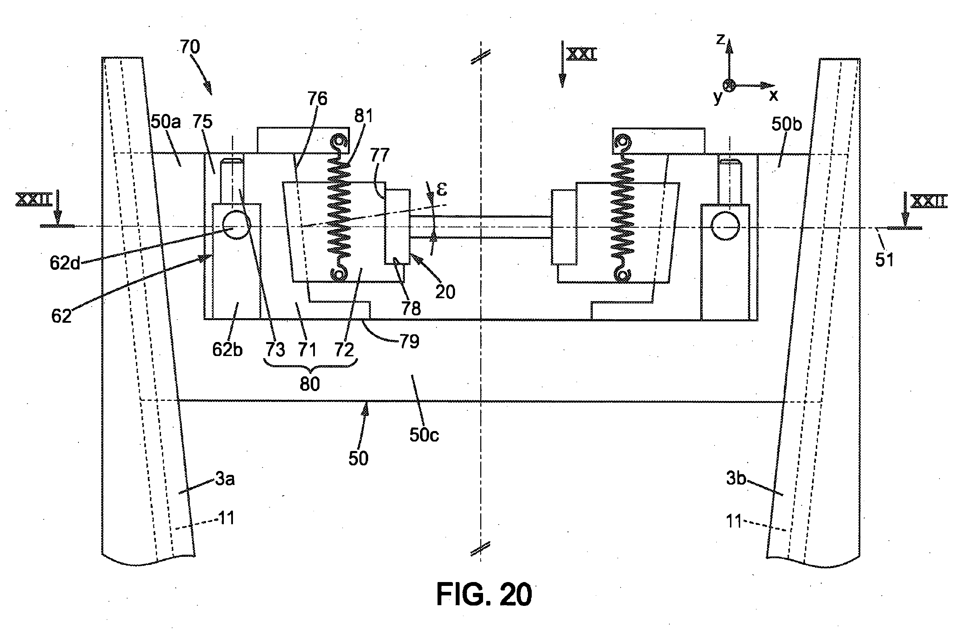

On va à l'aide des figures 20 à 22 décrire un moyen autobloquant **70** pour la deuxième famille de modes de réalisation de l'invention. Le moyen autobloquant 70 comprend un chariot longitudinal **71,** un coin d'agrippement **72** embarqué sur le chariot longitudinal 71 et des rouleaux principaux **73** intercalés entre une surface de glissement **74** du chariot longitudinal 71 et une surface d'appui mutuel de coincement **75** appartenant au support 50. La surface d'appui mutuel de coincement 75 présente une normale incluse dans le plan (x, y) et est inclinée par rapport à l'axe "x" d'un angle γ d'arc-boutement. Cette surface 75 d'appui mutuel de coincement joue le même rôle que la première surface du moyen autobloquant 52.

Le coin d'agrippement 72 est en appui mutuel sur le chariot longitudinal 71 par une surface de débrayage **76** dont la normale est incluse dans le plan (x, z) et est inclinée par rapport à l'axe longitudinal "x" d'un angle ε. La portion 20 de lien comprend un plan d'agrippement **77** perpendiculaire à l'axe 1a et une surface d'actionnement **78** sensiblement parallèle au plan tangent 51. Le plan d'agrippement 77 ne reçoit que l'effort de pincement parallèle au plan tangent, selon la direction de référence R illustrée en figure 19.

Par ailleurs, le chariot longitudinal **71** présente une surface d'appui radial **79** avec la portion 50c du support 50. La composante radiale exercée par la portion 20 de lien sur l'élément rotatif 1, 2 est transmise au support 50 via la surface d'actionnement 78, les surfaces de débrayage 76 et la surface d'appui mutuel radial 79.

Les rouleaux principaux 73, le chariot longitudinal 71 et le coin d'agrippement 72 sont des solides de liaison en équilibre statique les uns par rapport aux autres en configuration de coincement et constituent ensemble un élément de liaison **80,** lequel élément de liaison 80 lie la portion 20 de lien au support 50. Cet élément de liaison 80 est également un élément de coincement 80 qui est arc-bouté entre la surface d'appui mutuel de coincement 75 et le plan d'agrippement 77. Les surfaces de débrayage 76 sont une interface d'appui mutuel interne à l'élément de liaison et de coincement 80.

Avantageusement, le coin d'agrippement 72 est ramené dans une position de repos par des ressorts de rappel 81. Ainsi, le coin d'agrippement 72 au repos est présente un jeu axial par rapport à la trajectoire d'approche de la portion 20 de lien.

Le moyen autobloquant 70 est également équipé d'une butée mobile 62 et d'un ressort de rappel 63 jouant le même rôle que dans le moyen autobloquant 52.

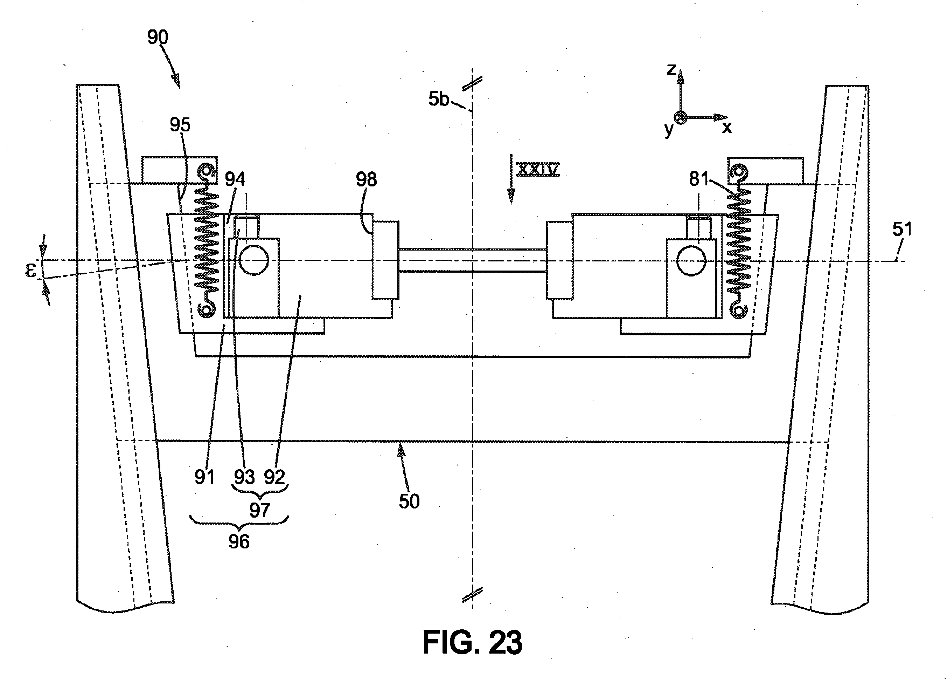

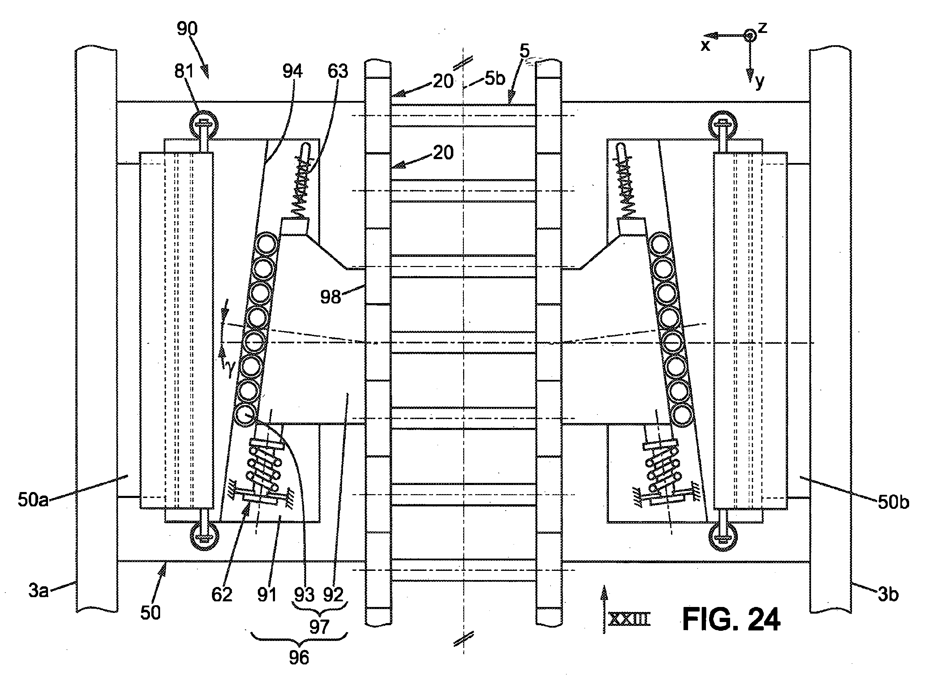

On va à l'aide des figures 23 et 24 décrire un moyen autobloquant **90** qui comprend un chariot radial **91** et un coin d'agrippement **92** embarqué sur le chariot radial 90. Des rouleaux principaux **93** sont intercalés entre le coin d'agrippement 92 et une surface d'appui mutuel de coincement **94,** laquelle appartient au chariot radial 91. La surface d'appui mutuel de coincement 94 présente une normale incluse dans le plan (x, y) et est inclinée par rapport à l'axe longitudinal "x" d'un angle γ d'arc-boutement. Le chariot radial 91 et le support 50 sont en appui mutuel par une surface d'appui mutuel **95** qui est également une surface de débrayage 95, laquelle est inclinée d'un angle ε par rapport à l'axe longitudinal "x". Le moyen autobloquant 90 comprend un élément de liaison **96** constitué des solides de liaison que sont le chariot radial 91, le coin d'agrippement 92 et les rouleaux principaux 93. Le moyen autobloquant 90 comprend également un élément de coincement **97,** différent de l'élément de liaison 96 et constitué par une partie seulement des solides de liaison 91, 92, 93 que sont le coin d'agrippement 92 et les rouleaux principaux 93. L'élément de coincement 97 est conçu pour s'arc-bouter sur la surface d'appui mutuel de coincement 94 et un plan d'agrippement **98** de la portion 20 de lien.

Le fonctionnement des moyens autobloquants 70 et 90 est similaire à celui du moyen autobloquant 52. Seul change l'emplacement de la surface de débrayage qui peut être située à n'importe quelle interface entre deux solides de liaison empilés pour constituer l'élément de liaison.

Dans une autre variante non illustrée, des solides de liaison peuvent être reliés de manière permanente par un pont de matière à un autre solide de liaison, ou au support, ou au lien. Ce pont de matière constitue la surface d'appui mutuel correspondante en ce sens qu'il est rigide dans la direction de l'effort de liaison et peut être déformable dans une direction transversale. Ainsi, une variante analogue à la figure 15d peut comprendre une came 46 articulée par rapport au support grâce à un pont de matière. Cette variante peut faire partie de la deuxième famille de modes de réalisation de l'invention en ayant par exemple un axe de flexibilité de la came 46 parallèle au plan d'agrippement et incliné d'un angle ε par rapport à la direction longitudinale. La surface bombée de la came et le plan d'agrippement constituent alors des surfaces de débrayage tout en étant une surface d'appui mutuel de coincement.

Dans une variante, l'action de l'élément de liaison entre un montant du support et la portion de lien, ainsi que la contre-réaction du montant opposé du support sur la même portion de lien peuvent être supportés par un mécanisme plus complexe qu'un support monobloc en U.

**Revendications**

1. Mécanisme de transmission de puissance de rotation comprenant :

   - un lien (5) s'étendant le long d'une boucle fermée (5a) et constitué d'une succession de portions (20, 40) présentant chacune une direction longitudinale tangente à la boucle fermée (5a),
   - un premier et un deuxième élément rotatif (1, 2), mobiles respectivement en rotation autour d'un premier et d'un deuxième axe (1a, 2a),
   - des moyens de guidage du lien conçus pour guider le lien le long d'un premier cercle d'entraînement (6) coaxial au premier axe (1a) et d'un deuxième cercle d'entraînement (7) coaxial au deuxième axe (2a), la boucle fermée (5a) comprenant une portion active (6a, 7a) de chacun des cercles d'entraînement, et
   - des moyens de solidarisation temporaire de chaque portion (20, 40) de lien à successivement chacun des éléments rotatifs (1, 2) lorsque la portion de lien passe dans la portion active correspondante,
   - les moyens de solidarisation temporaire comprenant une pluralité de moyens autobloquants (12, 13, 52, 70, 90) répartis au moins le long de la portion active (6a) du premier cercle d'entraînement (6), les moyens autobloquant comprenant au moins un élément de coincement (19, 42, 43, 44, 45, 46, 64, 80, 97) en appui simultanément d'une part sur une première surface d'appui (33a, 55, 75, 94) appartenant au premier élément rotatif, et d'autre part sur une deuxième surface d'appui (24a, 58, 77, 98) appartenant à une portion (20) de lien (5) en regard de l'élément de coincement, **caractérisé en ce que** les premières et deuxièmes surfaces d'appui sont agencées de manière que au moins un élément de coincement (19, 42, 43, 44, 45, 46, 64, 80, 97) de la portion active (6a) du premier cercle d'entraînement (6) soit arc-bouté entre la première et la deuxième surface d'appui et soit apte à s'auto débloquer lorsque le moyen autobloquant correspondant quitte la portion active (6a) et **en ce que** au moins l'une desdites première ou deuxième surface d'appui est une surface d'agrippement tangentiel (24a) qui est parallèle à la direction longitudinale de la portion de lien contre laquelle l'élément de coincement est en appui.

2. Mécanisme selon la revendication 1, du type des mécanismes à rapport de transmission continûment variable (CVT) dans lequel les moyens de guidage du lien sont conçus de manière que le diamètre d'au moins le premier cercle d'entraînement (6) est continûment variable.

3. Mécanisme selon l'une des revendications précédentes, dans lequel les éléments de coincement (19, 42, 44, 45, 46, 64, 80, 97) sont aptes à rouler sur la première et/ou sur la deuxième surfaces d'appui correspondantes.

4. Mécanisme selon l'une des revendications précédentes, dans lequel les éléments de coincement du mécanisme sont pris parmi un groupe comprenant : des billes (44), des rouleaux (19), des tonneaux, des sous-ensembles (42, 64, 80, 97) équipés d'une semelle d'appui d'un côté et d'éléments roulants (42d) d'un côté opposé, des cames (46) articulées à une extrémité et ayant une surface d'appui bombée et frottante à l'autre extrémité, des cames allongées (45) présentant deux extrémités d'appui bombées et frottantes.

5. Mécanisme selon l'une des revendications précédentes, dans lequel la pluralité de moyens autobloquants est répartie le long du premier cercle d'entraînement (6) ou le long des deux cercles d'entraînement (6, 7).

6. Mécanisme selon la revendication 5, dans lequel le lien présente un premier plan d'agrippement (27a, 77, 98) perpendiculaire au premier et au deuxième axe (1a, 2a) dans lequel chaque portion (20, 40) de lien comprend au moins un élément rigide, chacun des éléments rigides comprenant une première surface d'agrippement (24a) s'étendant dans le premier plan d'agrippement (27a, 77, 98).

7. Mécanisme selon l'une des revendications 5 et 6, dans lequel le premier élément rotatif - ou chacun des deux éléments rotatifs (1,2)- est équipé d'une pluralité de supports (31, 50), mobiles radialement le long de l'élément rotatif correspondant, chacun des moyens autobloquants de l'élément rotatif correspondant comprenant au moins un élément de coincement rigide solidaire du support, et un moyen de rappel conçu pour ramener l'élément de coincement vers une position de coincement.

8. Mécanisme selon les revendications 6 et 7 prises dans leur ensemble, dans lequel chacun des supports (31, 50) comprend ladite première surface d'appui (30a, 33b, 55, 75, 94) de l'élément de coincement solidaire du support, le même élément de coincement (19, 42, 43, 44, 45, 46, 64, 80, 97) en position de coincement appuyant sur ladite deuxième surface d'appui (24a, 58, 77, 98) en une zone ayant comme centre un point, appelé point d'agrippement (29, 34, 0).

9. Mécanisme selon la revendication 8, dans lequel la première surface d'appui est une surface de coincement sensiblement plane et présentant un angle de coincement (36, $\gamma$) par rapport au premier plan d'agrippement (27a).

10. Mécanisme selon la revendication 9, dans lequel la normale à la surface de coincement (33a, 33b) présente un angle supplémentaire ($\beta$) par rapport à un plan perpendiculaire à un rayon passant par le point d'agrippement (34).

11. Mécanisme selon l'une des revendications précédentes, comprenant une pluralité de supports (50) solidaires en rotation du premier élément rotatif (1) et disposés le long du premier cercle d'entraînement (6), dans lequel chaque moyen autobloquant (52, 70, 90) présente un plan tangent (51) défini comme parallèle au premier axe et tangent à la boucle fermée (5a) à l'endroit du moyen autobloquant, et comprend au moins un élément de liaison (64, 80, 96) constitué d'un solide de liaison ou de plusieurs solides de liaison (53-54 ; 71-72-73 ; 91-92-93) en appui deux à deux par une surface d'appui mutuel (56 ; 74, 76), dans lequel, lorsque le moyen autobloquant (52, 70, 90) est dans une configuration de coincement, l'élément de liaison (64, 80, 96) est en appui sur l'un des supports (50) par une surface d'appui mutuel (55, 75, 95) et sur une portion (20) du lien par une autre surface d'appui mutuel (57-58, 77, 98), dans lequel au moins l'une des surfaces d'appui mutuel est une surface de débrayage (57-58 ; 76, 95) dont une normale présente par rapport au plan tangent un angle ($\varepsilon$) supérieur ou égal à un angle de débrayage, et dans lequel chaque élément de liaison (64, 80, 96) comprend ledit élément de coincement (64, 80, 97) constitué de tous ou d'une partie des solides de liaison, l'élément de coincement étant, en configuration de coincement, arc-bouté entre deux surfaces d'appui mutuel de coincement (55-58 ; 75-77 ; 94-98) situées de part et d'autre de l'élément de coincement.

**12.** Mécanisme selon la revendication 11, dans lequel les surfaces d'appui mutuel définissent ensemble une direction de référence (R) qui est la direction d'un effort qui serait transmis au support (50) si la portion (20) de lien exerçait sur l'élément de liaison (64, 80, 96) un effort dépourvu de composante radiale, et dans lequel l'angle de débrayage est définit comme étant le plus petit angle d'inclinaison ($\varepsilon$) de la normale à la surface de débrayage par rapport au plan tangent (51), angle d'inclinaison pour lequel la direction de référence est hors du cône de frottement sur la surface de débrayage (57-58, 76, 95).

**13.** Mécanisme selon l'une des revendications 11 ou 16, dans lequel l'angle de débrayage est définit comme ayant une tangente égale au coefficient de frottement ($\mu$) sur la surface de débrayage (57-58, 76, 95).

**14.** Mécanisme selon l'une des revendications 11 à 13, dans lequel le support (50) présente une forme globale en U recevant la portion (20) de lien correspondante en arrivant dans la portion active (6a, 7a), et dans lequel la portion de lien est pincée entre un effort (F) exercé par l'élément de liaison du moyen autobloquant entre une branche (50a) du U et la portion (20) de lien et une contre réaction ayant une composante axiale opposée exercée entre l'autre branche (50b) du U et la même portion (20) de lien.

**15.** Mécanisme selon l'une des revendications 11 à 14, dans lequel la portion (20) de lien comprend une surface d'actionnement (57, 78) par laquelle la portion (20) de lien exerce, lorsque celle-ci s'approche du support (50) correspondant, un effort d'actionnement présentant une composante radiale, lequel effort d'actionnement est alors transmis au support via l'élément de liaison (64, 80, 96), et dans lequel l'angle ($\varepsilon$) de la surface de débrayage (57-58, 76, 95) est inférieur à un angle maximum prédéterminé pour que l'apparition de l'effort d'actionnement donne à l'effort (F) exercé par l'élément de liaison (64, 80, 96) entre le support (50) et la portion (20) de lien une direction incluse dans le cône de frottement de la surface de débrayage.

**16.** Mécanisme selon l'une des revendications 11 à 15, dans lequel au moins celle des surfaces d'appui mutuel de coincement (55, 75, 94) qui n'est pas une surface de débrayage présente une normale parallèle au plan tangent (51), et dans lequel l'élément de liaison (64, 80, 96) est solidaire du support (50).

**17.** Mécanisme selon la revendication 16, dans lequel la surface d'appui mutuel de coincement (55, 75) dont la normale est parallèle au plan tangent appartient au support (50) et dans lequel l'élément de liaison (64, 80) est confondu avec l'élément de coincement et comprend un coin d'agrippement (53, 72) coopérant avec un plan d'agrippement (58, 77) du lien qui est aussi la surface de débrayage (57-58 ; 76).

**18.** Mécanisme selon la revendication 16, dans lequel l'élément de liaison (80) est confondu avec l'élément de coincement et comprend un chariot longitudinal (71) mobile parallèlement au plan tangent (51) ; l'élément de liaison et de coincement (80) comprend en outre un coin d'agrippement (72), embarqué sur le chariot longitudinal (71) et coulissant radialement sur le chariot longitudinal le long de la surface de débrayage (76).

**19.** Mécanisme selon la revendication 18, dans lequel l'élément de liaison et de coincement (80) comprend en outre une série de rouleaux (73) parallèles intercalés entre une surface de glissement (74) du chariot longitudinal (71) et la surface d'appui mutuel de coincement (75) appartenant au support (50).

**20.** Mécanisme selon la revendication 1, dans lequel ledit au moins un élément de coincement (19, 42, 43, 44, 45, 46, 64, 80, 97) est rigide.

**21.** Procédé de transmission de puissance de rotation entre deux éléments rotatifs (1, 2) utilisant un lien (5) en boucle fermée, le procédé comprenant les étapes :

- de liaison dans laquelle on fait circuler chaque portion de lien (5) d'un élément rotatif à l'autre,
- d'autoblocage des portions de lien lorsque celles-ci sont autour d'un des éléments rotatifs, et
- d'autodéblocage des portions de lien lorsque celles-ci circulent d'un élément rotatif à l'autre, **caractérisé en ce que** l'auto-blocage se fait par arc-boutement d'un élément de coincement (19, 42, 43, 44, 45, 46, 64, 80, 97) entre l'élément rotatif et ladite portion, la transmission de la puissance mécanique se faisant par un frottement sur une surface parallèle à la tangente à la portion correspondante de la boucle fermée (5a).

**Patentansprüche**

1. Drehkraftübertragungsmechanismus, umfassend:

   - ein Verbindungsglied (5), das entlang einer geschlossenen Schleife (5a) verläuft und aus einer Abfolge von Abschnitten (20, 40) gebildet ist, die jeweils eine Längsrichtung tangential zur geschlossenen Schleife (5a) aufweisen,
   - ein erstes und ein zweites Drehelement (1, 2), die jeweils drehbeweglich um eine erste und eine zweite Achse (1a, 2a) sind,
   - Führungsmittel des Verbindungsglieds, die so gestaltet sind, dass sie das Verbindungsglied einen ersten Antriebskreis (6), der koaxial zur ersten Achse (1a) ist, und einen zweiten Antriebskreis (7) entlang führen, der koaxial zur zweiten Achse (2a) ist, wobei die geschlossene Schleife (5a) einen Wirkabschnitt (6a, 7a) von jedem der Antriebskreise umfasst, und
   - Mittel zum vorübergehenden festen Verbinden jedes Abschnitts (20, 40) des Verbindungsglieds mit nacheinander jedem der Drehelemente (1, 2), wenn der Verbindungsgliedabschnitt in den entsprechenden Wirkabschnitt gelangt,

   wobei die Mittel zum vorübergehenden festen Verbinden eine Vielzahl von Selbstklemmmitteln (12, 13, 52, 70, 90) umfassen, die zumindest entlang dem Wirkabschnitt (6a) des ersten Antriebskreises (6) verteilt sind, wobei die Selbstklemmmittel mindestens ein Klemmelement (19, 42, 43, 44, 45, 46, 64, 80, 97) umfassen, das gleichzeitig einerseits auf einer ersten Auflagefläche (33a, 55, 75, 94), die dem ersten Drehelement zugehörig ist, und andererseits auf einer zweiten Auflagefläche (24a, 58, 77, 98) aufliegt, die einem Abschnitt (20) des Verbindungsglieds (5) gegenüber dem Klemmelement zugehörig ist, **dadurch gekennzeichnet, dass** die erste und zweite Auflagefläche so angeordnet sind, dass mindestens ein Klemmelement (19, 42, 43, 44, 45, 46, 64, 80, 97) des Wirkabschnitts (6a) des ersten Antriebskreises (6) zwischen der ersten und der zweiten Auflagefläche gehalten ist und dazu in der Lage ist, sich selbsttätig zu lösen, wenn das entsprechende Selbstklemmmittel den Wirkabschnitt (6a) verlässt, und dadurch, dass die erste und/oder die zweite Auflagefläche eine Tangentialgreiffläche (24a) ist, die parallel zur Längsrichtung des Verbindungsgliedabschnitts verläuft, auf dem das Klemmelement aufliegt.

2. Mechanismus nach Anspruch 1, vom Typ Mechanismen mit stufenlos einstellbarem Übersetzungsverhältnis (CVT), wobei die Führungsmittel des Verbindungsglieds so gestaltet sind, dass der Durchmesser von zumindest dem ersten Antriebskreis (6) stufenlos einstellbar ist.

3. Mechanismus nach einem der vorhergehenden Ansprüche, wobei die Klemmelemente (19, 42, 44, 45, 46, 64, 80, 97) in der Lage sind, auf der ersten und/oder auf der zweiten entsprechenden Auflagefläche zu rollen.

4. Mechanismus nach einem der vorhergehenden Ansprüche, wobei die Klemmelente des Mechanismus aus einer Gruppe ausgewählt sind umfassend: Kugeln (44), Rollen (19), fassförmige Rollen, Untereinheiten (42, 64, 80, 97), die auf einer Seite mit einer Auflageplatte und auf einer gegenüberliegenden Seite mit rollenden Elementen (42d) versehen sind, Kurven (46), die an einem Ende angelenkt sind und an dem anderen Ende eine gewölbte Auflage- und Lauffläche aufweisen, langgestreckte Kurven (45) mit zwei gewölbten Auflage- und Laufenden.

5. Mechanismus nach einem der vorhergehenden Ansprüche, wobei die Vielzahl von Selbstklemmmitteln entlang dem ersten Antriebskreis (6) oder entlang den beiden Antriebskreisen (6, 7) verteilt ist.

6. Mechanismus nach Anspruch 5, wobei das Verbindungsglied eine erste Greifebene (27a, 77, 98) senkrecht zur ersten und zur zweiten Achse (1a, 2a) aufweist, wobei jeder Verbindungsgliedabschnitt (20, 40) mindestens ein starres Element umfasst, wobei jedes starre Element eine erste Greiffläche (24a) umfasst, die in der ersten Greifebene (27a, 77, 98) verläuft.

7. Mechanismus nach einem der Ansprüche 5 und 6, wobei das erste Drehelement - oder jedes der beiden Drehelemente (1, 2) - mit einer Vielzahl von Trägern (31, 50) versehen ist, die entlang dem entsprechenden Drehelement radial beweglich sind, wobei jedes der Selbstklemmmittel des entsprechenden Drehelements mindestens ein starres Klemmelement umfasst, das fest mit dem Träger verbunden ist, und ein Rückstellmittel, das so gestaltet ist, dass es das Klemmelement in eine Klemmposition bringt.

8. Mechanismus nach Anspruch 6 und 7 gemeinsam, wobei jeder der Träger (31, 50) die erste Auflagefläche (30a, 33b, 55, 75, 94) des Klemmelements umfasst, das fest mit dem Träger verbunden ist, wobei dasselbe Klemmelement (19, 42, 43, 44, 45, 46, 64, 80, 97) in der Klemmposition auf der zweiten Auflagefläche (24a, 58, 77, 98) in einem Bereich aufliegt, in dessen Mitte sich ein als Greifpunkt (29, 34, 0) bezeichneter Punkt befindet.

9. Mechanismus nach Anspruch 8, wobei die erste Auflagefläche eine im Wesentlichen ebene Klemmfläche ist und einen Klemmwinkel (36, γ) bezogen auf die erste Greifebene (27a) aufweist.

10. Mechanismus nach Anspruch 9, wobei die Normale zur Klemmfläche (33a, 33b) einen zusätzlichen Winkel (β) bezogen auf eine Ebene senkrecht zu einem Radius aufweist, die durch den Greifpunkt (34) verläuft.

11. Mechanismus nach einem der vorhergehenden Ansprüche, der eine Vielzahl von Trägern (50) umfasst, die drehfest mit dem ersten Drehelement (1) verbunden und entlang dem ersten Antriebskreis (6) angeordnet sind, wobei jedes Selbstklemmmittel (52, 70, 90) eine Tangentialebene (51) aufweist, die als parallel zur ersten Achse und tangential zur geschlossenen Schleife (5a) im Bereich des Selbstklemmmittels definiert ist, und mindestens ein Verbindungselement (64, 80, 96) umfasst, das von einem Verbindungskörper oder mehreren Verbindungskörpern (53-54; 71-72-73; 91-92-93) gebildet wird, die paarweise über eine gegenseitige Auflagefläche (56; 74, 76) aufliegen, wobei, wenn sich das Selbstklemmmittel (52, 70, 90) in einer Klemmgestaltung befindet, das Verbindungselement (64, 80, 96) auf einem der Träger (50) über eine gegenseitige Auflagefläche (55, 75, 95) und auf einem Verbindungsgliedabschnitt (20) über eine weitere gegenseitige Auflagefläche (57-58, 77, 98) aufliegt, wobei mindestens eine der gegenseitigen Auflageflächen eine Ausrückfläche (57-58; 76, 95) ist, von der eine Normale bezogen auf die Tangentialebene einen Winkel (ε) größer oder gleich einem Ausrückwinkel aufweist, und wobei jedes Verbindungselement (64, 80, 96) das Klemmelement (64, 80, 97) umfasst, das aus allen Verbindungskörpern oder einem Teil davon gebildet wird, wobei das Klemmelement in der Klemmgestaltung zwischen zwei gegenseitigen Klemmauflageflächen (55-58; 75-77; 94-98), die sich auf beiden Seiten des Klemmelements befinden, gehalten ist.

12. Mechanismus nach Anspruch 11, wobei die gegenseitigen Auflageflächen gemeinsam eine Bezugsrichtung (R) definieren, die die Richtung einer Kraft ist, die auf den Träger (50) übertragen werden würde, wenn der Verbindungsgliedabschnitt (20) auf das Verbindungselement (64, 80, 96) eine Kraft ohne radiale Komponente ausüben würde, und wobei der Ausrückwinkel als der kleinste Neigungswinkel (ε) der Normalen zur Ausrückfläche bezogen auf die Tangentialebene (51) definiert ist, wobei für den Neigungswinkel die Bezugsrichtung außerhalb des Reibungskegels auf der Ausrückfläche (57-58, 76, 95) liegt.

13. Mechanismus nach einem der Ansprüche 11 oder 12, wobei der Ausrückwinkel so definiert ist, dass er eine Tangente gleich dem Reibungsbeiwert (μ) auf der Ausrückfläche (57-58, 76, 95) aufweist.

14. Mechanismus nach einem der Ansprüche 11 bis 13, wobei der Träger (50) ganz allgemein eine U-Form aufweist, die den entsprechenden Verbindungsgliedabschnitt (20) aufnimmt, wenn er in den Wirkabschnitt (6a, 7a) gelangt, und wobei der Verbindungsgliedabschnitt zwischen einer Kraft (F), die von dem Verbindungselement des Selbstklemmmittels zwischen einem Schenkel (50a) des U und dem Verbindungsgliedabschnitt (20) ausgeübt wird, und einer Gegenkraft mit einer entgegengesetzten axialen Komponente eingeklemmt ist, die zwischen dem anderen Schenkel (50b) des U und demselben Verbindungsgliedabschnitt (20) ausgeübt wird.

15. Mechanismus nach einem der Ansprüche 11 bis 14, wobei der Verbindungsgliedabschnitt (20) eine Betätigungsfläche (57, 78) umfasst, über die der Verbindungsgliedabschnitt (20), wenn er sich dem entsprechenden Träger (50) nähert, eine Betätigungskraft mit einer radialen Komponente ausübt, wobei die Betätigungskraft dann über das Verbindungselement (64, 80, 96) auf den Träger übertragen wird, und wobei der Winkel (ε) der Ausrückfläche (57-58, 76, 95) kleiner ist als ein vorgegebener maximaler Winkel, damit durch Auftreten der Antriebskraft der Kraft (F), die von dem Verbindungselement (64, 80, 96) zwischen dem Träger (50) und dem Verbindungsgliedabschnitt (20) ausgeübt wird, eine Richtung innerhalb des Reibungskegels der Ausrückfläche verliehen wird.

16. Mechanismus nach einem der vorhergehenden Ansprüche 11 bis 15, wobei zumindest die der gegenseitigen Klemm- und Auflageflächen (55, 75, 94), die keine Ausrückfläche ist, eine Normale parallel zur Tangentialebene (51) aufweist, und wobei das Verbindungselement (64, 80, 96) fest mit dem Träger (50) verbunden ist.

17. Mechanismus nach Anspruch 16, wobei die gegenseitige Klemm- und Auflagefläche (55, 75), deren Normale parallel zur Tangentialebene verläuft, dem Träger (50) zugehörig ist, und wobei das Verbindungselement (64, 80) identisch mit dem Klemmelement ist und einen Greifkeil (53, 72) umfasst, der mit einer Greifebene (58, 77) des Verbindungsglieds zusammenwirkt, die auch die Ausrückfläche (57-58; 76) ist.

18. Mechanismus nach Anspruch 16, wobei das Verbindungselement (80) identisch mit dem Klemmelement ist und einen Längsschlitten (71) umfasst, der parallel zur Tangentialebene (51) beweglich ist; wobei das Verbindungs- und Klemmelement (80) ferner einen auf dem Längsschlitten (71) angeordneten Greifkeil (72) umfasst, der sich auf dem Längsschlitten die Ausrückfläche (76) entlang verschieben lässt.

19. Mechanismus nach Anspruch 18, wobei das Verbindungs- und Klemmelement (80) ferner eine Reihe von parallelen Rollen (73) umfasst, die zwischen einer Gleitfläche (74) des Längsschlittens (71) und der gegenseitigen Klemm- und Auflagefläche (75), die dem Träger (50) zugehörig ist, eingeschoben sind.

20. Mechanismus nach Anspruch 1, wobei das mindestens eine Klemmelement (19, 42, 43, 44, 45, 46, 64, 80, 97) starr ist.

21. Verfahren zum Übertragen einer Drehkraft zwischen zwei Drehelementen (1, 2) unter Verwendung eines als geschlossene Schleife geformten Verbindungsglieds (5), wobei das Verfahren folgende Schritte umfasst:

- einen Verbindungsschritt, in dem jeder Abschnitt des Verbindungsglieds (5) von einem Drehelement zum anderen gebracht wird,
- einen Schritt zum selbsttätigen Klemmen der Verbindungsgliedabschnitte, wenn sich diese um eins der Drehelemente herum befinden, und
- einen Schritt zum selbsttätigen Lösen der Verbindungsgliedabschnitte, wenn diese sich von einem Drehelement zum anderen bewegen,

**dadurch gekennzeichnet, dass** das selbsttätige Klemmen durch Halten eines Klemmelements (19, 42, 43, 44, 45, 46, 64, 80, 97) zwischen dem Drehelement und dem Abschnitt erfolgt, wobei die Übertragung der mechanischen Kraft durch Reibung auf einer Fläche parallel zur Tangente zum entsprechenden Abschnitt der geschlossenen Schleife (5a) erfolgt.

**Claims**

1. Rotary power transmission mechanism comprising:

- a link (5) extending along a closed loop (5a) and consisting of a succession of portions (20, 40), each of which has a longitudinal direction tangent to the closed loop (5a);
- a first and second rotary element (1, 2), mobile in rotation respectively around a first and second axis (1a, 2a);
- link guide means designed to guide the link along a first drive circle (6) coaxial to the first axis (1a) and along a second drive circle (7) coaxial to the second axis (2a), the closed loop (5a) comprising an active portion (6a, 7a) of each of the drive circles; and
- means for temporarily unifying each link portion (20, 40) to successively each of the rotating elements (1, 2) whenever the link portion passes into the corresponding active portion;

the temporary unification means comprising a plurality of self-locking means (12, 13, 52, 70, 90) distributed at least along the active portion (6a) of the first drive circle (6), the self-locking means comprising at least a locking element (19, 42, 43, 44, 45, 46, 64, 80, 97) simultaneously resting upon, on the one hand, a first support surface (33a, 55, 75, 94) belonging to the first rotating element, and, on the other hand, upon a second support surface (24a, 58, 77, 98) belonging to a link portion (20) facing the locking element, **characterized in that** the first and second support surfaces are arranged in such a way that at least one locking element (19, 42, 43, 44, 45, 46, 64, 80, 97) of the active portion (6a) of the first drive circle (6) is jammed between the first and second support surface and is able to self-unlock whenever the corresponding self-locking means leaves the active portion (6a), and wherein at least one of said first or second support surfaces is a tangential gripping surface (24a) that is parallel to the longitudinal direction of the link portion against which the locking element rests.

2. Mechanism according to claim 1, of the type of continuously variable transmission (CVT) ratio mechanisms in which the guide means of the link are designed in such a way that the diameter of at least the first drive circle (6) is continuously variable.

3. Mechanism according to one of the previous claims in which the locking elements (19, 42, 44, 45, 46, 64, 80, 97) are capable of rolling on the first and/or second corresponding support surfaces.

4. Mechanism according to one of the previous claims in which the locking elements of the mechanism are chosen from among a group comprising: balls (44), rollers (19), barrels, subassemblies (42, 64, 80, 97) equipped with a support pad on one side and rolling elements (42d) on an opposite side, cams (46) articulated at one extremity and having a curved and rubbing support surface at the other extremity, elongated cams (45) having two curved and rubbing support extremities.

5. Mechanism according to one of the previous claims in which the plurality of self-locking means is distributed along the first drive circle (6) or along the two drive circles (6, 7).

6. Mechanism according to claim 5, in which the link has a first gripping plane (27a, 77, 98) perpendicular to the first and second axis (1a, 2a) in which each link portion (20, 40) comprises at least one rigid element, wherein each of the rigid elements comprises a first gripping surface (24a) extending into the first gripping plane (27a, 77, 98).

7. Mechanism according to one of claims 5 and 6, in which the first rotary element - or each of the two rotary elements (1, 2) - is equipped with a plurality of supports (31, 50), radially mobile along the corresponding rotating element, wherein each of the self-locking means of the corresponding rotary element comprises at least one rigid locking element integral with the support and one return means designed to bring the locking element into a locking position.

8. Mechanism according to claims 6 and 7 taken together, in which each of the supports (31, 50) comprises said first support surface (30a, 33b, 55, 75, 94) of the locking element integral with the support, wherein the same locking element (19, 42, 43, 44, 45, 46, 64, 80, 97) in locking position presses upon said second support surface (24a, 58, 77, 98) in a zone having as its center a point known as the gripping point (29, 34, 0).

9. Mechanism according to claim 8, in which the first support surface is an appreciably plane locking surface having a locking angle (36, γ) with respect to the first gripping plane (27a).

10. Mechanism according to claim 9, in which the normal to the locking surface (33a, 33b) has a supplementary angle (β) with respect to a plane perpendicular to a radius that passes through the gripping point (34).

11. Mechanism according to one of the previous claims, comprising a plurality of supports (50) rotationally integral with the first rotating element (1) and arranged along the first drive circle (6), in which each self-locking means (52, 70, 90) has a tangent plane (51) defined as being parallel to the first axis and tangent to the closed loop (5a) at the location of the self-locking means and comprises at least one connecting element (64, 80, 96) consisting of a connecting solid or several connecting solids (53-54; 71-72-73; 91-92-93) resting, two-by-two, on a mutual support surface (56 ; 74, 76),
in which when the self-locking means (52, 70, 90) is in a locking configuration, the connecting element (64, 80, 96) is resting on one of the supports (50) through a mutual support surface (55, 75, 95) and on a portion of the link through another mutual support surface (57-58, 77, 98),
in which at least one of the mutual support surfaces is a disengagement surface (57-58; 76, 95) whose normal presents, with respect to the tangent plane, an angle (ε) greater than or equal to a disengagement angle,
and in which each connecting element (64, 80, 96) comprises said locking element (64, 80, 97) consisting of all or part of the connecting solids, the locking element being, in its locking configuration, jammed between two mutual locking support surfaces (55-58; 75-77; 94-98) situated on either side of the locking element.

12. Mechanism according to claim 11 in which the mutual support surfaces together define a reference direction (R), which is the direction of a force that would be transmitted to the support (50) if the link portion (20) exerted on the connecting element (64, 80, 96) a force without radial component, and in which the disengagement angle is defined as being the smallest angle of inclination (ε) of the normal to the disengagement surface with respect to the tangent plane (51), angle of inclination for which the reference direction is outside the cone of friction on the disengagement surface (57-58, 76, 95).

13. Mechanism according to one of claims 11 or 12 in which the disengagement angle is defined as having a tangent equal to the coefficient of friction (μ) on the disengagement surface (57-58, 76, 95).

14. Mechanism according to one of claims 11 to 13 in which the support (50) presents an overall U shape receiving the corresponding link portion (20) arriving in the active portion (6a, 7a), and in which the link portion is pinched between a force (F) exerted by the connecting element of the self-locking means between a branch (50a) of the U and the link portion (20) and a counter reaction having an opposing axial component exerted between the other branch (50b) of the U and the same link portion (20).

15. Mechanism according to one of claims 11 to 14 in which the link portion (20) comprises an actuating surface (57, 78) through which the link portion (20) exerts, whenever it approaches the corresponding support (50), an actuating force having a radial component, which actuating force is then transmitted to the support via the connecting element (64, 80, 96), and in which the angle (ε) of the disengagement surface (57-58, 76, 95) is less than a predetermined maximum angle so that the appearance of the actuating force gives to the force (F) exerted by the connecting element (64, 80, 96) between the support (50) and the link portion (20) a direction included in the cone of friction of the disengagement surface.

16. Mechanism according to one of claims 11 to 15 in which at least one of the mutual locking support surfaces (55, 75, 94) that is not a disengagement surface has a normal parallel to the tangent plane (51) and in which the connecting element (64, 80, 96) is integral with the support (50).

17. Mechanism according to claim 16, in which the mutual locking support surface (55, 75) whose normal is parallel to the tangent plane belongs to the support (50) and in which the connecting element (64, 80) is indistinguishable with the locking element and comprises a gripping wedge (53, 72) that cooperates with a gripping plane (58, 77) of the link that is also the disengagement surface (57-58; 76-77).

18. Mechanism according to claim 16, in which the connecting element (80) is indistinguishable with the locking element and comprises a longitudinal carriage (71) movable in parallel to the tangent plane (51), the connecting and locking element (80) also comprising a gripping wedge (72), located on the longitudinal carriage (71) and sliding radially on the longitudinal carriage along the disengagement surface (76).

19. Mechanism according to claim 18 in which the connecting and locking element (80) also comprises a series of parallel rollers (73) placed between a sliding surface (74) of the longitudinal carriage (71) and the mutual locking support surface (75) belonging to the support (50).

20. Mechanism according to claim 1, in which the locking elements (19, 42, 44, 45, 46, 64, 80, 97) are rigid.

21. Method of rotational power transmission between two rotating elements (1, 2) utilizing a link (5) in a closed loop, the method comprising the steps:

- of linking, in which each link portion (5) circulates from one rotary element to another,
- of the self-locking of link portions whenever these are around one of the rotating elements, and
- of the self-unlocking of link portions whenever these circulate from one rotating element to the other, **characterized in that** the self-locking occurs by jamming a locking element (19, 42, 43, 44, 45, 46, 64, 80, 97) between the rotating element and said portion, the transmission of mechanical power occurring through friction upon a surface parallel to the tangent to the corresponding portion of the closed loop (5a).

**FIG. 1**

**FIG. 2**

**FIG. 3a**

**FIG. 3b**

**FIG. 3d**

**FIG. 3c**

**FIG. 4**

VII

## FIG. 5

13

18

5

17

19a

19

29

30a

37

31

16

15

FIG. 6

FIG. 7

EP 2 734 748 B1

FIG. 8a

FIG. 8b

FIG. 8c

29

XII

35

31

33b

12

19

X

X

16

33a

XI

19

FIG. 9

FIG. 10

FIG. 11

FIG. 12

FIG. 13a

FIG. 13b

FIG. 13c

5

40            40                    40

5b

# FIG. 14a

40

40

XIVa

XIVa

# FIG. 14b

FIG. 15a

**FIG. 15b**

**FIG. 15c**

**FIG. 15d**

FIG. 16

FIG. 17

FIG. 18

FIG. 19

**FIG. 20**

FIG. 21

EP 2 734 748 B1

FIG. 22

EP 2 734 748 B1

FIG. 23

EP 2 734 748 B1

FIG. 24

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 436053 A
- GB 356196 A
- US 4078442 A
- WO 2008012591 A
- US 2328544 A
- GB 575725 A
- GB 551690 A
- EP 1811205 A